# EUROPEAN PATENT APPLICATION

(11) **EP 4 621 536 A1**
(43) Date of publication of application: **24.09.2025**
(21) Application number: 23910892.1
(22) Date of filing: 29.12.2023
(51) Int. Cl.: G06F 3/04817, G06F 3/0481

(54) **CURSOR DISPLAY METHOD AND RELATED DEVICE**

(30) Priority: 30.12.2022 CN 202211737859
(71) Applicant: Huawei Technologies Co., Ltd., Shenzhen, Guangdong 518129 (CN)
(72) Inventor: ZHAO, Yunjing, Shenzhen, Guangdong 518129 (CN); HE, Zhenyi, Shenzhen, Guangdong 518129 (CN)
(74) Representative: Grünecker Patent- und Rechtsanwälte PartG mbB
(86) International application number: PCT/CN2023/143016
(87) International publication number: WO 2024/140978

(57) **Abstract**

A cursor display method and a related device are provided. The method may be applied to the image processing field in the field of artificial intelligence. The method includes: displaying a cursor on a first image after obtaining the first image on which an image processing task needs to be performed, where a cursor in a first style corresponds to an image processing task of a first type, a cursor in a second style corresponds to an image processing task of a second type, the cursor in the first style is different from the cursor in the second style, the image processing task of the first type and the image processing task of the second type are different types of image processing tasks, and a type of the image processing task corresponds to a semantic type of an image area in which the cursor is located. Cursors in different styles are displayed, to remind a user of a specific type of image processing task performed on the area in which the cursor is located. This helps reduce a probability of the user performing a misoperation, and can help the user accurately obtain desired information.

## Description

This application claims priority to Chinese Patent Application No. 202211737859.1, filed with the China National Intellectual Property Administration on December 30, 2022 and entitled "CURSOR DISPLAY METHOD AND RELATED DEVICE", which is incorporated herein by reference in its entirety.

### TECHNICAL FIELD

This application relates to the field of artificial intelligence, and in particular, to a cursor display method and a related device.

### BACKGROUND

With continuous development of image content recognition technologies, a plurality of image processing tasks may be performed on an image, to obtain various information from the image. For example, the plurality of image processing tasks may include: performing text recognition on a text in the image, recognizing an object in the image, recognizing a QR code in the image, performing image matting on an object in the image, or performing another type of image processing task.

After completing the plurality of image processing tasks on the image, a user may edit or extract information obtained from the image. For example, the user may select a text in the image and then copy the text. For another example, the user may obtain category information of an object in the image.

Because the plurality of image processing tasks are performed on the image, a plurality of types of information can be obtained from the image based on the plurality of image processing tasks, but the user may not accurately obtain information desired by the user. For example, if there is a text on an object in the image, when the user inputs an operation on the object, category information of the object may be obtained, or the text on the object may be copied.

### SUMMARY

Embodiments of this application provide a cursor display method and a related device. Cursors in different styles are displayed, to remind a user of a specific type of image processing task performed on an area in which the cursor is located. This helps reduce a probability of the user performing a misoperation, and can help the user accurately obtain desired information.

To resolve the foregoing technical problem, embodiments of this application provide the following technical solutions.

According to a first aspect, an embodiment of this application provides a cursor display method, which may be applied to the image processing field in the field of artificial intelligence. The method includes: A second terminal device may display a cursor on a first image after obtaining the first image on which an image processing task needs to be performed, where a cursor in a first style corresponds to an image processing task of a first type, a cursor in a second style corresponds to an image processing task of a second type, the cursor in the first style is different from the cursor in the second style, the image processing task of the first type and the image processing task of the second type are different types of image processing tasks, and a type of the image processing task corresponds to a semantic type of an image area in which the cursor is located.

For example, if a semantic type of an image area A1 in the first image is a text, a type of an image processing task performed on the image area A1 may include: performing text recognition and text translation, and a cursor displayed in the image area A1 may be an "I" -shaped cursor. If a semantic type of an image area A2 in the first image is an image, a type of an image processing task performed on the image area A2 may include: recognizing an object in the image area A2, detecting a contour of an object in the image area A, and performing image matting on the object in the image area A2, and a cursor displayed in the image area A1 may be an "arrow"-shaped cursor. For another example, if a semantic type of an image area A3 in the first image is a special text, a type of an image processing task performed on the image area A3 may include: recognizing the special text in the image area A3, and a cursor displayed in the image area A3 may be a "hand"-shaped cursor. For another example, if a semantic type of an image area A4 in the first image is a QR code, a type of an image processing task performed on the image area A4 may include: recognizing the QR code and the like.

In this implementation, the cursor in the first style corresponds to the image processing task of the first type, and the cursor in the second style corresponds to the image processing task of the second type. That is, cursors in different styles are displayed, to remind a user of a type of image processing task performed on the area in which the cursor is located. This helps reduce a probability of the user performing a misoperation, and helps the user accurately obtain desired information.

In a possible implementation, the method further includes: After obtaining target content from the first image, the second terminal device may determine first information based on the target content in the first image; send the first information to a first terminal device, where an account associated with the user exists on the first terminal device, and the first information is used to request the first terminal device to grant permission to perform an operation corresponding to the target content.

For example, if the target content includes a mobile phone number recognized from the first image, and the second terminal device have no call function, the operation corresponding to the target content is making a call to the mobile phone number. For another example, if the target content includes a QR code that is recognized from the first image and on which a scanning operation needs to be performed, the first information may be used to request another terminal device to grant permission to perform an operation corresponding to the QR code, and the like. This is not exhaustively listed herein.

In this implementation, when obtaining the target content from the first image, the second terminal device may send the first information to the first terminal device associated with the user, to request the first terminal device to grant permission to perform the operation corresponding to the target content, in other words, perform the operation corresponding to the target content with assistance of the first terminal device. This enriches functions that can be implemented by the second terminal device, and facilitates implementation, thereby helping improve user stickiness in this solution.

In a possible implementation, when the target content includes the QR code on which the scanning operation needs to be performed, before the second terminal device sends the first information to the first terminal device, the method may further include: obtaining identity information of the user, and obtaining the first terminal device based on the identity information of the user.

The account that exists on the first terminal device and that is associated with the user is an account of an application indicated by the QR code, and the first information is used to request the first terminal device to grant permission to perform the operation corresponding to the QR code. For example, the identity information of the user may be obtained in any one or more other manners: invoking a camera of the second terminal device to photograph the user to obtain face information of the user, invoking a fingerprint recognition sensor of the second terminal device to obtain fingerprint information of the user, recognizing a wearable device worn on the user, or obtaining the identity information of the user in another manner.

For example, "the account associated with the user exists on the first terminal device" may be understood as that there is information about the user in identity information registered on the first terminal device. In this case, all accounts on the first terminal device are associated with the user. Alternatively, "the account associated with the user exists on the first terminal device" may be understood as that a first account registered by the user in the application indicated by the QR code is determined based on the identity information of the user, and the first account of the user is logged in on the first terminal device.

In this implementation, when the QR code on which the scanning operation needs to be performed is recognized from the first image, the identity information of the user is first obtained, and the first terminal device is determined based on the identity information of the user, where the account that is associated with the user and that is of the application indicated by the QR code exists on the first terminal device; and request information is sent to the first terminal device to which the account associated with the user belongs. In this way, the user can complete the scanning operation without taking out another device, in other words, can complete the scanning operation on the QR code more conveniently. This helps improve user stickiness in this solution.

In a possible implementation, that the second terminal device obtains the first terminal device based on the identity information of the user includes: When there is the identity information of the user in identity information registered on the second terminal device, the second terminal device obtains the first terminal device from a terminal device associated with the second terminal device, where there is the identity information of the user in the identity information registered on the first terminal device.

In this implementation, only when there is the identity information of the user in the identity information registered on the second terminal device, the first terminal device is obtained from the terminal device associated with the second terminal device, and there is the identity information of the user in the identity information registered on the first terminal device. That is, only on a premise that the user is an authorized holder of the first terminal device and the second terminal device, a request for assisting, by the first terminal device, the second terminal device in performing the operation corresponding to the QR code is triggered. This avoids disturbance to an authorized user of the second terminal device, and improves security of this solution.

In a possible implementation, a type of an image processing task includes any one or more of the following: performing text recognition on the first image, recognizing a special text in the first image, translating a text in the first image, recognizing an object in the first image, recognizing a QR code in the first image, recognizing a contour of an object in the first image, or performing image matting on an object in the first image. The special text includes any one or more of the following: a website address, an email address, a phone number, an address, an express number, a flight number, a train number, a person name, or a unit symbol.

In this implementation, a plurality of types of image processing tasks are performed on the first image. In other words, this solution is applicable to a scenario in which various types of image processing tasks are performed on the image, so that an application scenario of this solution is extended.

In a possible implementation, there are at least two image areas in the first image, the at least two image areas correspond to at least two different types of image processing tasks, and a processing order of the at least two different types of image processing tasks is adjustable; and/or the first image includes a first image area and a second image area, the first image area and the second image area correspond to a same image processing task, and a processing order of the first image area and the second image area is adjustable.

In this implementation, a processing order of different types of image processing tasks performed on the first image is adjustable, and/or for the first image area and the second image area in the first image, the first image area and the second image area correspond to the same image processing task, and the processing order of the first image area and the second image area is also adjustable. In other words, a processing order of different types of image processing tasks and/or a processing order of different image areas are/is adjustable. This greatly improves flexibility of performing a plurality of image processing tasks on the first image.

In a possible implementation, the method may further include: In a process of performing an image processing task of a third type, the second terminal device obtains location information of the cursor in the first image; and if it is determined, based on the location information of the cursor in the first image, that an image processing task of a fourth type needs to be performed, suspending performing the image processing task of the third type, and starting to perform the image processing task of the fourth type. The image processing task of the third type and the image processing task of the fourth type are different image processing tasks.

In this implementation, because there is a high probability that a location of the cursor in the first image is a location at which the user intends to obtain information from the first image, in a process of performing the image processing tasks on the image, a processing order of a plurality of image processing tasks is adjusted in time based on the location of the cursor, that is, the image processing tasks are performed on the image area in which the cursor is located in time. In this way, the user can obtain desired information from the image in time, so that waiting time of the user is shortened.

In a possible implementation, a factor for determining the initial processing order of the at least two different types of image processing tasks includes any one or more of the following: a historical operation performed by the user on at least one of the image processing tasks, a preset priority of each image processing task, or a processing speed of each image processing task.

Optionally, if the second terminal device sorts execution frequencies of the at least two types of image processing tasks based on the historical operation performed by the user on the at least one of the image processing tasks, an image processing task with a higher execution frequency corresponds to a higher initial processing order.

Optionally, the user may alternatively preset a processing order of the plurality of types of image processing tasks. That is, first sorting information may be pre-stored in the second terminal device, where the first sorting information indicates the processing order of the plurality of types of image processing tasks. After determining the at least two types of image processing tasks, the second terminal device may alternatively determine the initial processing order of the at least two types of image processing tasks based on the first sorting information.

Optionally, an image processing task with a higher processing speed corresponds to a higher initial processing order.

In this implementation, a higher execution frequency of an image processing task of a type indicates a higher probability that the user still intends to perform the image processing task in a current operation; a higher preset priority of each image processing task indicates a higher probability that the user intends to perform the image processing task in the current operation; and an image processing task performed earlier indicates that a corresponding image processing result can be obtained earlier. In this case, the initial processing order of the at least two different types of image processing tasks is determined based on the first two factors. This helps obtain an image processing result required by the user earlier, thereby improving user stickiness in this solution.

A higher processing speed of an image processing task indicates that an image processing result that can be displayed to the user can be obtained earlier. In this case, the initial processing order of the at least two different types of image processing tasks is determined based on the processing speed of each image processing task. This helps shorten waiting time of the user, thereby improving user stickiness in this solution.

In a possible implementation, the method further includes: The second terminal device displays second information corresponding to a second image. The second information includes any one or more of the following: a storage address of the second image, a sending object of the second image, or a pasting location of the second image. The second image is included in the first image, or the second image is the first image.

In this implementation, when the second image is obtained from the first image, the storage address, the sending object, the pasting location, or the like of the second image may be further recommended to the user. This improves convenience of the user in a process of processing the second image, and helps improve user stickiness in this solution.

In a possible implementation, a factor for determining the second information includes any one or more of the following: a category of an object in the second image, at least one application running on a device in a first time period before a current moment, a historical storage address of an image, or a historical pasting location of an image. In this implementation, the second information recommended to the user is determined based on the category of the object in the second image, the at least one application running on the device in the time period before the current moment, the historical storage address of the image, the historical pasting location of the image, or the another factor. This helps increase a probability that the second information recommended to the user meets expectation of the user.

In a possible implementation, that the second terminal device obtains the first image on which the image processing task needs to be performed includes: The second terminal device may trigger freezing of a display interface when obtaining a first operation; and the second terminal device obtains the first image from the frozen display interface based on a selection operation input by the user.

For example, when the user performs a pressing operation on a preset physical button, the second terminal device may determine that the user inputs the first operation. Alternatively, an icon for receiving the first operation may be pre-deployed on the display interface of the second terminal device, and the user may input the first operation on the icon. The first operation includes but is not limited to: performing a click operation, a double-click operation, a drag operation, or another type of operation on the icon. Alternatively, the user may input a voice instruction to the second terminal device. When obtaining the voice instruction, the second terminal device determines that the first operation input by the user is obtained.

In this implementation, the user may trigger freezing of the display interface by inputting the first operation, to obtain, from the frozen display interface, the first image on which the image processing task needs to be performed. According to the foregoing solution, the user can customize an image on which the image processing task is to be performed and a range in which the image processing task is to be performed. This improves flexibility of a process of performing the image processing task on the image, and helps improve user stickiness in this solution.

In a possible implementation, when obtaining the first operation input by the user, the second terminal device may further trigger the cursor displayed on the display interface to change from a third style to a fourth style. The "cursor in the fourth style" can prompt the user to input a first selection operation, and then the second terminal device determines "the first image on which the image processing task needs to be performed".

In a possible implementation, if the second terminal device determines a screenshot of a partial area (referred to as a "first area" below for ease of description) on the display interface as the first image, the second terminal device may freeze only the first area on the display interface, and unfreeze an area other than the first area on the display interface. In this embodiment of this application, the user may move the cursor into the first area only when necessary. Because the second area on the display interface has been unfrozen, use of the second area on the display interface by the user is not affected. This helps improve convenience of using the display interface by the user.

In a possible implementation, when the cursor is located in the first area, the second terminal device may display the first image to the user in the first area on the display interface, so that the user can extract content from the first image. When the cursor moves out of the first area, the second terminal device may further unfreeze the first area on the display interface. After the cursor re-enters the first area again, the second terminal device may re-display the first image in the first area. The user may move the cursor to the first area only when necessary, to extract the content from the first image. When the user moves the cursor outside the first area on the display interface, the second area on the display interface can be normally used, and the first area on the display interface can be normally used. This helps further improve convenience of using the display interface by the user, to further improve user stickiness in this solution.

According to a second aspect, an embodiment of this application provides a cursor display apparatus, which may be used in the image processing field in the field of artificial intelligence. The cursor display apparatus includes: an obtaining module, configured to obtain a first image on which an image processing task needs to be performed; and a display module, configured to display a cursor on the first image, where a cursor in a first style corresponds to an image processing task of a first type, a cursor in a second style corresponds to an image processing task of a second type, the cursor in the first style is different from the cursor in the second style, the image processing task of the first type and the image processing task of the second type are different types of image processing tasks, and a type of the image processing task corresponds to a semantic type of an image area in which the cursor is located.

In the second aspect of this application, the cursor display apparatus may be further configured to perform the steps performed by the second terminal device in the first aspect and the possible implementations of the first aspect. For specific implementations of the steps, meanings of nouns, and beneficial effects in the possible implementations of the second aspect, refer to the first aspect. Details are not described herein again.

According to a third aspect, an embodiment of this application provides a computer-readable storage medium. The computer-readable storage medium stores a computer program. When the computer program is run on a computer, the computer is enabled to perform the cursor display method according to the first aspect.

According to a fourth aspect, an embodiment of this application provides a terminal device, including a processor and a memory. The processor is coupled to the memory, the memory is configured to store a program, and the processor is configured to execute the program in the memory, for the terminal device to perform the cursor display method according to the first aspect.

According to a fifth aspect, an embodiment of this application provides a computer program product. The computer program product includes a program. When the program is run on a computer, the computer is enabled to perform the cursor display method according to the first aspect.

According to a sixth aspect, this application provides a chip system. The chip system includes a processor, configured to support a terminal device in implementing a function in the foregoing aspects, for example, sending or processing data and/or information in the foregoing method. In a possible design, the chip system further includes a memory. The memory is configured to store program instructions and data that are necessary for the terminal device or a communication device. The chip system may include a chip, or may include a chip and another discrete component.

### BRIEF DESCRIPTION OF DRAWINGS

FIG. 1 is a diagram of a structure of an artificial intelligence main framework according to an embodiment of this application;
FIG. 2 is a schematic flowchart of a cursor display method according to an embodiment of this application;
FIG. 3 is another schematic flowchart of a cursor display method according to an embodiment of this application;
FIG. 4 is a diagram in which a cursor changes from a third style to a fourth style according to an embodiment of this application;
FIG. 5 is a schematic flowchart of determining a first image according to an embodiment of this application;
FIG. 6 is an interface diagram of a cursor display method according to an embodiment of this application;
FIG. 7 is a diagram of taking a screenshot from a display interface according to an embodiment of this application;
FIG. 8 is an interface diagram of a cursor display method according to an embodiment of this application;
FIG. 9 is another interface diagram of a cursor display method according to an embodiment of this application;
FIG. 10 is a diagram of a plurality of interfaces on which a first terminal device performs a scanning operation on a QR code on a second terminal device according to an embodiment of this application;
FIG. 11 is an interface diagram of recommending a storage address of a second image to a user according to an embodiment of this application;
FIG. 12 is an interface diagram of recommending a pasting location of a second image to a user according to an embodiment of this application;
FIG. 13 is still another schematic flowchart of a cursor display method according to an embodiment of this application;
FIG. 14 is an interface diagram of an edge contour of a third image in a first image according to an embodiment of this application;
FIG. 15 is another interface diagram of an edge contour of a third image in a first image according to an embodiment of this application;
FIG. 16 is an interface diagram of inserting a table in a first image into a text application according to an embodiment of this application;
FIG. 17 is a diagram of a structure of a cursor display apparatus according to an embodiment of this application;
FIG. 18 is a diagram of another structure of a cursor display apparatus according to an embodiment of this application; and
FIG. 19 is a diagram of a structure of a terminal device according to an embodiment of this application.

### DESCRIPTION OF EMBODIMENTS

In the specification, claims, and the accompanying drawings of this application, the terms "first", "second", and the like are intended to distinguish between similar objects but do not necessarily indicate a specific order or sequence. It should be understood that the terms used in such a way are interchangeable in appropriate circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

The following describes embodiments of this application with reference to the accompanying drawings. A person of ordinary skill in the art may know that, with development of technologies and emergence of new scenarios, the technical solutions provided in embodiments of this application are also applicable to a similar technical problem.

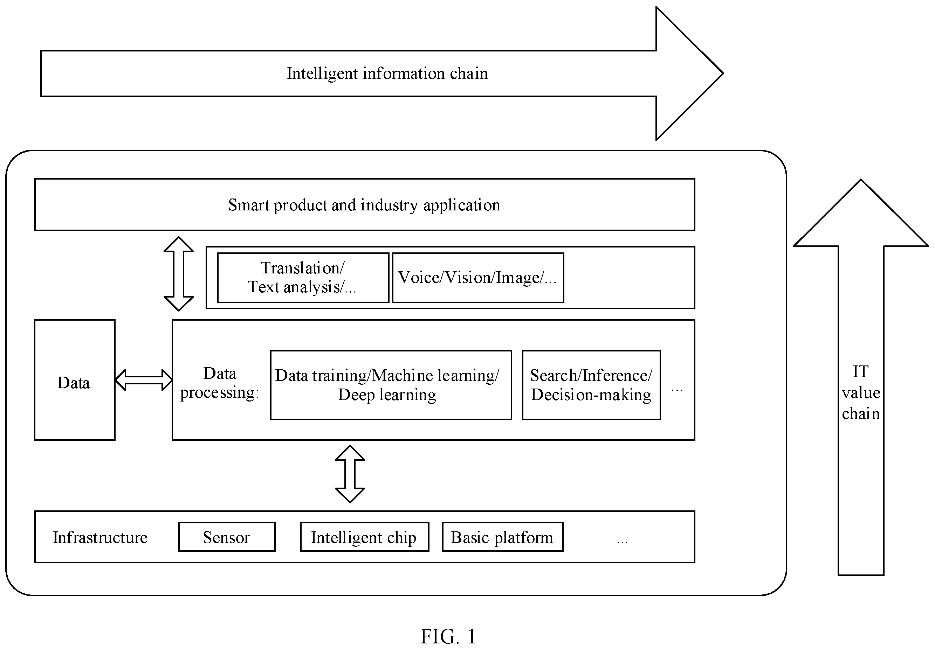

An overall working procedure of an artificial intelligence system is first described. FIG. 1 is a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects value brought by artificial intelligence to the information technology industry from underlying infrastructure and information (providing and processing technology implementation) of artificial intelligence to an industrial ecological process of a system.

### (1) Infrastructure

The infrastructure provides computing capability support for the artificial intelligence system, implements communication with the external world, and implements support through a basic platform. The infrastructure communicates with the external world through a sensor. A computing capability is provided by an intelligent chip. The intelligent chip may specifically be a hardware acceleration chip like a central processing unit (central processing unit, CPU), an embedded neural-network processing unit (neural-network processing unit, NPU), a graphics processing unit (graphics processing unit, GPU), an application-specific integrated circuit (application-specific integrated circuit, ASIC), or a field-programmable gate array (field-programmable gate array, FPGA). The basic platform includes related platform assurance and support such as a distributed computing framework and a network, and may include cloud storage and computing, an interconnection and interworking network, and the like. For example, the sensor communicates with the outside to obtain data, and the data is provided, for computing, for an intelligent chip in a distributed computing system provided by the basic platform.

### (2) Data

Data at an upper layer of the infrastructure indicates a data source in the field of artificial intelligence. The data relates to a graph, an image, a voice, and a text, further relates to Internet of things data of a conventional device, and includes service data of an existing system and perception data like force, displacement, a liquid level, a temperature, and humidity.

### (3) Data processing

Data processing usually includes data training, machine learning, deep learning, searching, inference, decision-making, and the like.

Machine learning and deep learning may mean performing symbolic and formal intelligent information modeling, extraction, preprocessing, training, and the like on data.

Inference is a process in which a human intelligent inference manner is simulated in a computer or an intelligent system, and machine thinking and problem resolving are performed by using formalized information according to an inference control strategy. Typical functions are searching and matching.

Decision-making is a process of making a decision after intelligent information is inferred, and usually provides functions such as classification, ranking, and prediction.

### (4) General capability

After data processing mentioned above is performed on data, some general capabilities may be further formed based on a data processing result. For example, the general capabilities may be an algorithm or a general system, for example, translation, text analysis, computer vision processing, voice recognition, and image recognition.

### (5) Smart product and industry application

The smart product and the industry application are a product and application of the artificial intelligence system in various fields, and are package of an overall solution of artificial intelligence, so that decision making for intelligent information is productized and the application is implemented. Application fields thereof mainly include a smart terminal, smart manufacturing, smart transportation, a smart home, smart health care, smart security protection, autonomous driving, a smart city, and the like.

This application may be applied to the image processing field in the field of artificial intelligence, and is specifically applied to a scenario in which at least one image processing task needs to be performed on an obtained image. A type of the at least one image processing task performed on the image corresponds to a semantic type of at least one image area in the image. For example, the type of at least one image processing task performed on the image may include any one or more of the following: performing text recognition on a first image, recognizing a special text in a first image, translating a text in a first image, recognizing an object in a first image, recognizing a QR code in a first image, recognizing a contour of an object in a first image, performing image matting on an object in a first image, performing another type of image processing task on a first image, or the like. This is not exhaustively listed herein.

For example, in the intelligent terminal field, in a process of holding an online conference, a user may need to take a screenshot of a specific frame of the conference, and perform text recognition on text content in the screenshot, to extract the text content from the screenshot.

For another example, in the smart home field, when a smart home displays an image to a user on a display interface, the user may intend to obtain a category of an object in the image for recognition. It should be noted that an example of an application scenario herein is merely for ease of understanding of this solution, and is not intended to limit this solution.

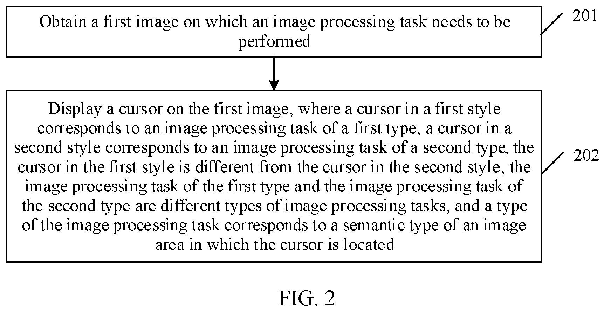

In the foregoing application scenarios, if a plurality of types of image processing tasks are performed on an image, to help the user accurately obtain information desired by the user and reduce a probability of the user performing a misoperation, this application provides a cursor display method. For details, refer to FIG. 2. FIG. 2 is a schematic flowchart of a cursor display method according to an embodiment of this application. 201: Obtain a first image on which an image processing task needs to be performed. 202: Display a cursor on the first image, where a cursor in a first style corresponds to an image processing task of a first type, a cursor in a second style corresponds to an image processing task of a second type, the cursor in the first style is different from the cursor in the second style, the image processing task of the first type and the image processing task of the second type are different types of image processing tasks, and a type of the image processing task corresponds to a semantic type of an image area in which the cursor is located.

For example, if a semantic type of an image area A1 in the first image is a text, a type of an image processing task performed on the image area A1 may include: performing text recognition and text translation, and a cursor displayed in the image area A1 may be an "I"-shaped cursor. If a semantic type of an image area A2 in the first image is an image, a type of an image processing task performed on the image area A2 may include: recognizing an object in the image area A2, detecting a contour of an object in the image area A, and performing image matting on the object in the image area A2, and a cursor displayed in the image area A1 may be an "arrow"-shaped cursor. For another example, if a semantic type of an image area A3 in the first image is a special text, a type of an image processing task performed on the image area A3 may include: recognizing the special text in the image area A3, and a cursor displayed in the image area A3 may be a "hand"-shaped cursor. For another example, if a semantic type of an image area A4 in the first image is a QR code, a type of an image processing task performed on the image area A4 may include: recognizing the QR code and the like. A specific type of image processing task performed on the first image needs to be determined based on specific content of the first image. This is not limited herein.

In this embodiment of this application, cursors in different styles are displayed, to remind a user of a specific type of image processing task performed on the area in which the cursor is located, in other words, provide the user with a specific type of image processing result that can be obtained in the area in which the cursor is located. This helps reduce a probability of the user performing a misoperation, and can help the user accurately obtain desired information.

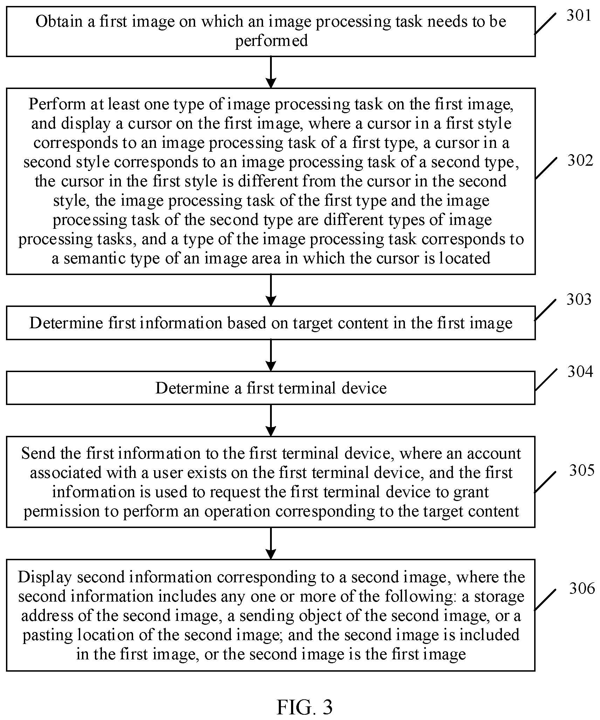

With reference to the foregoing descriptions, the following starts to describe a specific implementation procedure of a cursor display method according to an embodiment of this application. FIG. 3 is another schematic flowchart of a cursor display method according to an embodiment of this application. The cursor display method provided in this embodiment of this application may include the following steps.

301: Obtain a first image on which an image processing task needs to be performed.

In this embodiment of this application, a type of at least one image processing task performed by a second terminal device on the first image may include any one or more of the following: performing text recognition on the first image, recognizing a special text in the first image, translating a text in the first image, recognizing an object in the first image, recognizing a QR code in the first image, recognizing a contour of an object in the first image, performing image matting on an object in the first image, or performing another type of image processing task on the first image. This is not exhaustively listed herein.

For example, the performing text recognition on the first image may include: performing text detection, text block generation, character recognition, or another processing procedure, to detect and recognize a text in the first image.

The recognizing a special text in the first image may include: after a text recognition task is performed on some or all texts in the first image, determining whether a recognized text is the special text. Optionally, a type of the special text includes any one or more of the following: a website address, an email address, a phone number, an address, an express number, a flight number, a train number, a person name, a unit symbol, or another type of special text. A specific type of the special text may be flexibly determined based on an actual situation. This is not limited herein. For example, the "unit symbol" may be a unit of an exchange rate, a temperature, or other data.

The recognizing an object in the first image is recognizing an object existing in the first image. The recognizing a QR code in the first image includes: after recognizing the object in the first image, when it is recognized that a category of the object in the first image is the QR code, scanning the QR code to determine an operation that triggering of the QR code is desired.

The recognizing a contour of an object in the first image may include: recognizing a contour edge of the object in the first image; or recognizing a contour edge of an image in the first image; or recognizing a contour edge of a table in the first image; or the like. This is not exhaustively described herein. In this way, when it is necessary, a user may perform image matting on the foregoing object, or may directly perform image matting on the object in the first image, or the like.

In this embodiment of this application, a plurality of types of image processing tasks are performed on the first image. In other words, this solution is applicable to a scenario in which various types of image processing tasks are performed on the image, so that an application scenario of this solution is extended.

The second terminal device may obtain, in a plurality of manners, the first image on which the image processing task needs to be performed. In an implementation, when the user intends to perform at least one image processing task on an entire area or a partial area on a display interface of the second terminal device, the user may input a first operation by using the second terminal device. Correspondingly, when obtaining the first operation, the second terminal device may trigger freezing of the display interface.

"Freezing of the display interface" may be freezing of the entire display interface, and "freezing of the entire display interface" may also be understood as keeping a current frame of the display interface still; or "freezing of the display interface" may be freezing of a partial area on the display interface. The second terminal device obtains, from the frozen display interface based on a first selection operation input by the user, the first image on which the image processing task needs to be performed.

Specifically, the second terminal device may obtain, in a plurality of manners, the first operation input by the user. In an implementation, when the user performs a pressing operation on a preset physical button, the second terminal device may determine that the user inputs the first operation.

The preset physical button includes but is not limited to: a physical button on a keyboard connected to the second terminal device, a combination button including a plurality of physical buttons on a keyboard connected to the second terminal device, a physical button on a mouse connected to the second terminal device, another button on a peripheral of the second terminal device, or the like. This is not exhaustively listed herein. The pressing operation includes but is not limited to a click operation, a double-click operation, a touch and hold operation, or another type of pressing operation.

In another implementation, an icon for receiving the first operation may be pre-deployed on the display interface of the second terminal device, and the user may input the first operation for the icon. The first operation includes but is not limited to: performing a click operation, a double-click operation, a drag operation, or another type of operation on the icon. This is not exhaustively listed herein.

In another implementation, the user may alternatively input a voice instruction to the second terminal device. When obtaining the voice instruction, the second terminal device determines that the first operation input by the user is obtained.

For example, content of the voice instruction may be "Enable the AI Touch function", "Enable the image recognition function", "Perform image matting on the current display interface", "Extract the text from the current display interface", or other content. Specific content of the voice instruction that may be used may be flexibly set based on an actual application scenario. This is not limited herein.

It should be noted that the second terminal device may alternatively obtain, in another manner, the first operation input by the user. The foregoing examples are merely for ease of understanding of this solution, and are not intended to limit this solution.

Optionally, when obtaining the first operation input by the user, the second terminal device may further trigger the cursor displayed on the display interface to change from a third style to a fourth style. The "cursor in the fourth style" can prompt the user to input the first selection operation, and then the second terminal device determines "the first image on which the image processing task needs to be performed".

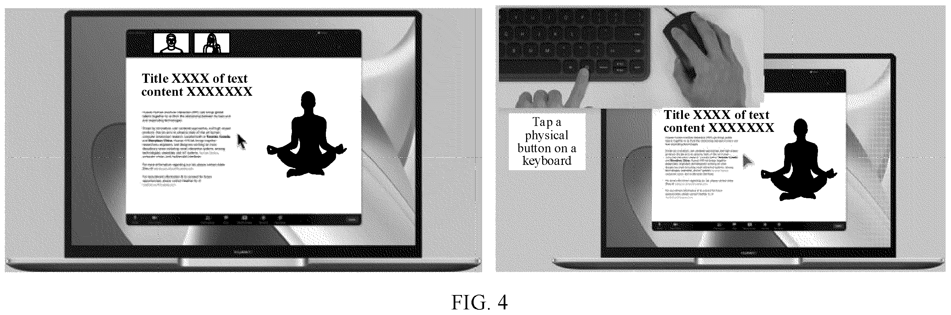

To understand this solution more intuitively, refer to FIG. 4. FIG. 4 is a diagram in which the cursor changes from the third style to the fourth style according to this embodiment of this application. In FIG. 4, an example in which the first operation is input by using a physical button on the keyboard is used. The second terminal device may trigger a change from the cursor in the third style to the cursor in the fourth style. It can be learned, by comparing a left sub-diagram with a right sub-diagram in FIG. 4, that a style of the cursor is changed after the user taps the physical button on the keyboard. It should be understood that the example in FIG. 4 is merely for ease of understanding of this solution, and is not intended to limit this solution.

A specific implementation in which the second terminal device obtains the first image from the frozen interface is described. After the second terminal device freezes the display interface, in one case, if the frozen display interface is the entire display interface, and the first image that the user intends to determine is the entire display interface, the user may input a preset operation. When the second terminal device receives the preset operation input by the user, the second terminal device may determine that the user inputs the first selection operation on the entire display interface, and then may determine a screenshot of the entire frozen display interface as the first image. The preset operation may be a click operation, a double-click operation, or another type of operation. This is not limited herein.

It should be noted that, if there are at least two windows in the "entire frozen display interface", and window ranges of the at least two windows overlap, in one case, the first image obtained by taking the screenshot of the "entire frozen display interface" may include at least two images corresponding to the at least two windows, where the at least two images respectively correspond to two layers at which the at least two windows are located, that is, the obtained first image includes complete content of each window on the "entire frozen display interface"; or in another case, the first image obtained by taking the screenshot of the "entire frozen display interface" includes only one image, and the image is content at an outermost layer, or the like. This is not limited herein. For understanding of the "screenshot" in each subsequent implementation, refer to the foregoing descriptions.

In another case, if the frozen display interface is the entire display interface, and the first image that the user intends to determine is a partial area on the entire display interface, the user may perform the first selection operation on the partial area on the entire frozen display interface by using the cursor, and the second terminal device may determine, as the first image, a screenshot of an area selected by the user.

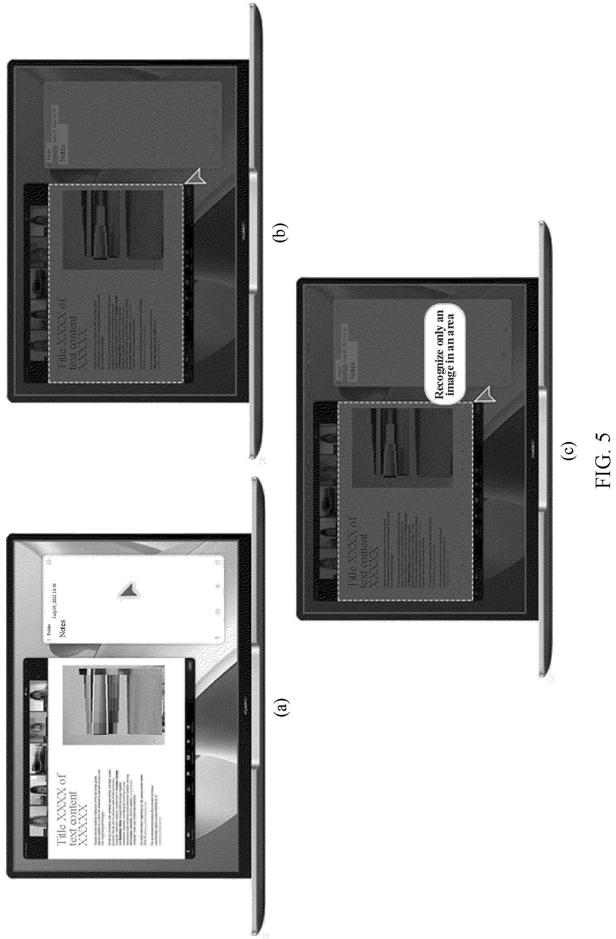

For more direct understanding of this solution, refer to FIG. 5. FIG. 5 is a schematic flowchart of determining the first image according to this embodiment of this application. In FIG. 5, an example in which the second terminal device is a notebook computer is used. FIG. 5 includes three sub-diagrams: (a), (b), and (c). As shown in the sub-diagram (a) in FIG. 5, the user is taking a note while holding an online conference on the computer, that is, both a window of an application for holding an online conference and a window of an application for taking a note are displayed on a display interface of the computer. When the user intends to extract content on a conference image (namely, the window of the online conference application), the user may input the first operation on the computer. After obtaining the first operation input by the user, the computer may be triggered to display an interface shown in a left sub-diagram in FIG. 5, in other words, freezing of the entire display interface is triggered, and then the cursor in the fourth style is displayed.

As shown in the sub-diagram (b) in FIG. 5, the user performs box selection on the window of the online conference application on the display interface. When the user moves the cursor to an edge of the window of the online conference application, entrance to the sub-diagram (c) in FIG. 5 may be triggered. That is, prompt information is output in a form of text box. The prompt information may be "Recognize only an image in an area" output by using the text box in the sub-diagram (c) in FIG. 5. When the computer receives a click operation performed by the user on the text box, the computer may determine that the user inputs the first selection operation in the area in which the window of the online conference application is located on the display interface, to determine a screenshot of the window of the online conference application as the first image. It should be understood that the example in FIG. 5 is merely for ease of understanding of this solution, and is not intended to limit this solution.

In another case, if the frozen display interface is the entire display interface, and the second terminal device has performed a selection operation on a preset area on the entire display interface, the user may perform an adjustment operation on the preset area to obtain an adjusted area, the second terminal device may determine that the user inputs the first selection operation on the adjusted area, and the second terminal device determines a screenshot of the adjusted area on the frozen display interface as the first image.

Alternatively, if the user inputs a determining operation on the preset area, the second terminal device may determine that the user performs the first selection operation on the preset area, and determine a screenshot of the preset area on the frozen display interface as the first image.

For example, the determining operation may be a click operation, a double-click operation, or another operation on a border of the preset area. For another example, the determining operation may include: When the user moves the cursor to a border of the preset area, the second terminal device may output prompt information in a form of text box, and when the user inputs a click operation in a text box, it is considered that the user inputs the determining operation in the preset area, where the prompt information may be "Perform AI Touch on the area", or other information. The "determining operation" may alternatively be another type of operation. The examples herein are merely for ease of understanding of this solution, and are not intended to limit this solution.

Optionally, the preset area may be a window of a preset application on the frozen display interface. For example, the preset application may be an application for holding an online conference, an application like PowerPoint (PowerPoint, PPT), or an application of another type. This is not exhaustively listed herein.

The preset application may be preset by the user, or may be determined based on a historical behavior of the user, for example, based on a frequency at which the user takes a screenshot of a window of a type of application on the display interface in a first time period; based on a case in which a frequency of performing an image processing task on a screenshot of a window of a type of application on the display interface is greater than or equal to a first threshold; and/or the like. It should be noted that a specific manner of determining the preset area may be flexibly determined with reference to an actual application scenario. The examples herein are merely for ease of understanding of this solution, and are not intended to limit this solution.

In another case, if the frozen display interface is a window of a preset application on the display interface, the user may directly input a determining operation on the frozen display interface, and the second terminal device may determine that the user performs the first selection operation on a frozen area on the display interface (namely, the preset application on the display interface). In this case, a screenshot of the window of the preset application on the display interface is determined as the first image, or the like.

It should be noted that the second terminal device may alternatively implement "obtaining the first image from the frozen display interface based on the first selection operation input by the user" in another manner. A specific implementation may be flexibly determined with reference to an actual application scenario. This is not limited herein.

In this embodiment of this application, the user may trigger freezing of the display interface by inputting the first operation, to obtain, from the frozen display interface, the first image on which the image processing task needs to be performed. According to the foregoing solution, the user can customize an image on which the image processing task is to be performed and a range in which the image processing task is to be performed. This improves flexibility of a process of performing the image processing task on the image, and helps improve user stickiness in this solution.

Optionally, if the second terminal device determines a screenshot of a partial area (referred to as a "first area" below for ease of description) on the display interface as the first image, the second terminal device may freeze only the first area on the display interface, and unfreeze an area (referred to as a "second area" below for ease of description) other than the first area on the display interface. In this embodiment of this application, the user may move the cursor into the first area only when necessary. Because the second area on the display interface has been unfrozen, use of the second area on the display interface by the user is not affected. This helps improve convenience of using the display interface by the user.

Optionally, when the cursor is located in the first area, the second terminal device may display the first image to the user in the first area on the display interface, so that the user can extract content from the first image. When the cursor moves out of the first area (in other words, is located in the second area), the second terminal device may further unfreeze the first area on the display interface. After the cursor re-enters the first area again, the second terminal device may re-display the first image in the first area. The user may move the cursor to the first area only when necessary, to extract the content from the first image. When the user moves the cursor outside the first area on the display interface, the second area on the display interface can be normally used, and the first area on the display interface can be normally used. This helps further improve convenience of using the display interface by the user, to further improve user stickiness in this solution.

Optionally, when the cursor is located in the first area, the second terminal device may display the cursor in the fourth style; or when the cursor is located in the second area, the second terminal device may display the cursor in the third style.

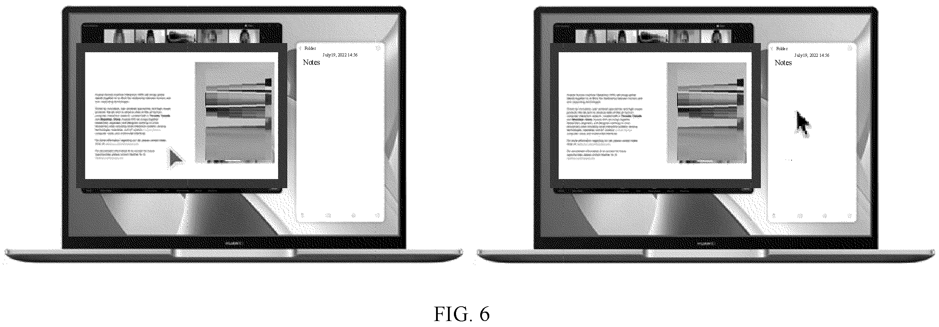

To understand this solution more intuitively, refer to FIG. 6. FIG. 6 is an interface diagram of a cursor display method according to an embodiment of this application. In FIG. 6, an example in which a screenshot of a window in which an online conference is held is the first image on which the image processing task needs to be performed is used. FIG. 6 includes two sub-diagrams: a left sub-diagram and a right sub-diagram. As shown in the left sub-diagram in FIG. 6, a frozen area on a display interface of a computer (namely, an example of the second terminal device) is an area (namely, the first area) within a dark gray border in FIG. 6. When the cursor enters the first area, the second terminal device displays the cursor in the fourth style. As shown in the right sub-diagram in FIG. 6, an area (namely, the second area) outside the dark gray border on the display interface of the computer is unfrozen. After the cursor moves out of the first area, the second terminal device switches the cursor to the third style. It should be understood that the example in FIG. 6 is merely for ease of understanding of this solution, and is not intended to limit this solution.

Optionally, when the user intends to take a screenshot of an entire area or a partial area on the display interface of the second terminal device, the user may alternatively input the first operation by using the second terminal device. Correspondingly, when obtaining the first operation, the second terminal device may trigger freezing of the display interface. The user may input a second selection operation for a partial area (referred to as a "target area" below for ease of description) on the frozen display interface. Correspondingly, after obtaining the second selection operation input by the user, the second terminal device may take a screenshot of the target area on the display interface to obtain a second image, and store the second image to a clipboard.

The second selection operation and the first selection operation are different operations. For example, if the first selection operation includes: right-clicking on a border of an area after the area on the display interface is determined, the second selection operation may include: left-clicking on the border of the area after the area on the display interface is determined.

For another example, if the first selection operation includes: inputting a click operation on a border of an area after the area on the display interface is determined, the second selection operation may include: inputting a double-click operation and the like on the border of the area after the area on the display interface is determined. It should be noted that examples of the first selection operation and the second selection operation herein are merely for ease of understanding of this solution, and specific implementations of the "first selection operation" and the "second selection operation" may be flexibly determined with reference to an actual application scenario, and are not limited herein.

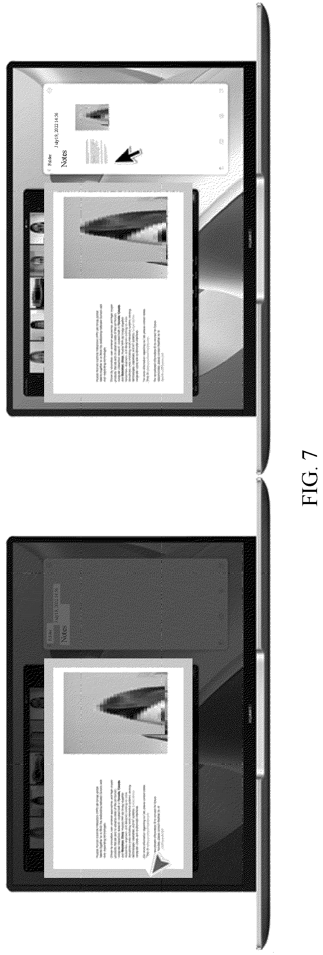

To understand this solution more intuitively, refer to FIG. 7. FIG. 7 is a diagram of taking a screenshot from a display interface according to an embodiment of this application. FIG. 7 includes two sub-diagrams: a left sub-diagram and a right sub-diagram. In the left sub-diagram in FIG. 7, after obtaining the first operation input by the user, a computer (namely, an example of the second terminal device) triggers freezing of the display interface, and displays the cursor in the fourth style. After performing box selection on a window (namely, the target area in a white border in FIG. 7) of an application for holding an online conference, the user may place the cursor in the fourth style on the border of the target area, and click a left button on the mouse, to complete the second selection operation on the target area on the display interface. After obtaining the second selection operation on the target area, the computer may take a screenshot of the target area on the display interface to obtain the second image. As shown in the right sub-diagram in FIG. 7, after the computer generates the second image, the user may paste the second image into a note. It should be understood that the example in FIG. 7 is merely for ease of understanding of this solution, and is not intended to limit this solution.

In another implementation, when the user intends to perform at least one image processing task on an image, the user may first open the image on the display interface of the second terminal device. When obtaining a second operation input by the user, the second terminal device may determine the image as the first image on which the image processing task needs to be performed. The second operation and the first operation may be a same operation, or may be different operations. Specifically, the second operation and the first operation may be flexibly set based on an actual application scenario. This is not limited herein.

302: Perform at least one type of image processing task on the first image, and display the cursor on the first image, where a cursor in a first style corresponds to an image processing task of a first type, a cursor in a second style corresponds to an image processing task of a second type, the cursor in the first style is different from the cursor in the second style, the image processing task of the first type and the image processing task of the second type are different types of image processing tasks, and a type of the image processing task corresponds to a semantic type of an image area in which the cursor is located.

In this embodiment of this application, after obtaining the first image, the second terminal device may perform the at least one type of image processing task on the first image, and display cursors in at least two styles on the first image.

The cursor in the first style corresponds to the image processing task of the first type, the cursor in the second style corresponds to the image processing task of the second type, the cursor in the first style is different from the cursor in the second style, and the image processing task of the first type and the image processing task of the second type are different types of image processing tasks. It should be noted that the cursor in the first style may be the same as or different from the cursor in the fourth style. Correspondingly, the cursor in the second style may be the same as or different from the cursor in the fourth style. The cursor in the first style and the cursor in the second style may be specifically flexibly set based on an actual situation, and are not limited herein.

The image processing task of the first type is any one of a plurality of types of image processing tasks, and the image processing task of the second type is any one of the plurality of types of image processing tasks other than the image processing task of the first type. For examples of the plurality of types of image processing tasks, refer to the descriptions in step 301. Details are not described herein again.

Further, a display style of a cursor may correspond to a type of an image processing task performed on an image area in which the cursor is located, and the type of the image processing task corresponds to a semantic type of the image area in which the cursor is located.

For example, if a semantic type of an image area A1 in the first image is a text, a type of an image processing task performed on the image area A1 may include: performing text recognition and text translation, and a cursor displayed in the image area A1 may be an "I"-shaped cursor. If a semantic type of an image area A2 in the first image is an image, a type of an image processing task performed on the image area A2 may include: recognizing an object in the image area A2, detecting a contour of an object in the image area A, and performing image matting on the object in the image area A2, and a cursor displayed in the image area A1 may be an "arrow"-shaped cursor. Alternatively, if a semantic type of an image area A3 in the first image is a special text, a type of an image processing task performed on the image area A3 may include: recognizing the special text in the image area A3, and a cursor displayed in the image area A3 may be a "hand"-shaped cursor. It should be noted that the examples herein are merely for ease of understanding of this solution, and are not intended to limit this solution. For another example, if a semantic type of an image area A4 in the first image is a QR code, a type of an image processing task performed on the image area A4 may include: recognizing the QR code and the like. A specific type of image processing task performed on the first image needs to be determined based on specific content of the first image. This is not limited herein.

Specifically, in an implementation, the second terminal device may start to display the cursor on the first image after completing all types of image processing tasks on the entire first image.

In another implementation, after obtaining the first image, the second terminal device may start to display the cursor on the first image in a process of performing the image processing task on the first image.

Optionally, if at least two types of image processing tasks need to be performed on the first image, the second terminal device may sequentially perform the at least two types of image processing tasks on the first image.

An initial processing order of at least two different types of image processing tasks may be random. Alternatively, optionally, a factor for determining the initial processing order of the at least two different types of image processing tasks includes any one or more of the following: a historical operation performed by the user on at least one of the image processing tasks, a preset priority of each image processing task, a processing speed of each image processing task, or another factor.

Optionally, if the second terminal device sorts execution frequencies of the at least two types of image processing tasks based on the historical operation performed by the user on the at least one of the image processing tasks, an image processing task with a higher execution frequency corresponds to a higher initial processing order.

Optionally, the user may alternatively preset a processing order of the plurality of types of image processing tasks. That is, first sorting information may be pre-stored in the second terminal device, where the first sorting information indicates the processing order of the plurality of types of image processing tasks. After determining the at least two types of image processing tasks, the second terminal device may alternatively determine the initial processing order of the at least two types of image processing tasks based on the first sorting information.

For example, the first sorting information indicates that the plurality of image processing tasks are in a processing order of an image processing task 1, an image processing task 2, an image processing task 3, ..., and an image processing task 7 in sequence. If the second terminal device determines that the at least two types of image processing tasks include the image processing task 3 and the image processing task 6, it may be determined that an initial processing order of the image processing tasks is that the image processing task 3 is performed before the image processing task 6. It should be understood that the example herein is merely for ease of understanding of this solution, and is not intended to limit this solution.

Optionally, an image processing task with a higher processing speed corresponds to a higher initial processing order.

In this embodiment of this application, a higher execution frequency of an image processing task of a type indicates a higher probability that the user still intends to perform the image processing task in a current operation; a higher preset priority of each image processing task indicates a higher probability that the user intends to perform the image processing task in the current operation; and an image processing task performed earlier indicates that a corresponding image processing result can be obtained earlier. In this case, the initial processing order of the at least two different types of image processing tasks is determined based on the first two factors. This helps obtain an image processing result required by the user earlier, thereby improving user stickiness in this solution.

A higher processing speed of an image processing task indicates that an image processing result that can be displayed to the user can be obtained earlier. In this case, the initial processing order of the at least two different types of image processing tasks is determined based on the processing speed of each image processing task. This helps shorten waiting time of the user, thereby improving user stickiness in this solution.

Optionally, in a process in which the second terminal device performs the at least two different types of image processing tasks based on the initial processing order, if there are at least two image areas in the first image, the at least two image areas correspond to the at least two different types of image processing tasks, and the processing order of the at least two different types of image processing tasks is adjustable; and/or the first image includes a first image area and a second image area, the first image area and the second image area correspond to a same image processing task, and a processing order of the first image area and the second image area is adjustable.

Optionally, in a process of performing an image processing task of a third type, the second terminal device may obtain location information of the cursor in the first image; and if it is determined, based on the location information of the cursor in the first image, that an image processing task of a fourth type needs to be performed, the second terminal device suspends performing the image processing task of the third type, and starts to perform the image processing task of the fourth type. The image processing task of the third type and the image processing task of the fourth type are different image processing tasks.

For example, the second terminal device may adjust the processing order of the at least two different types of image processing tasks based on the location information of the cursor in the first image, hover time of the cursor, an operation input by the user by using the cursor, or other information.

It should be noted that the image processing task of the third type is any one of the at least two types of image processing tasks performed on the first image, and the image processing task of the fourth type is any one of the at least two types of image processing tasks performed on the first image other than the image processing task of the first type. A relationship between the image processing task of the third type and "the image processing task of the first type and the image processing task of the second type" is not limited in embodiments of this application. In other words, the image processing task of the third type may be the same as or different from the image processing task of the first type, and the image processing task of the third type may be the same as or different from the image processing task of the second type. Correspondingly, a relationship between the image processing task of the fourth type and "the image processing task of the first type and the image processing task of the second type" is not limited in embodiments of this application.

In this embodiment of this application, because there is a high probability that a location of the cursor in the first image is a location at which the user intends to obtain information from the first image, in a process of performing the image processing tasks on the image, a processing order of a plurality of image processing tasks is adjusted in time based on the location of the cursor, that is, the image processing tasks are performed on the image area in which the cursor is located in time. In this way, the user can obtain desired information from the image in time, so that waiting time of the user is shortened.

In a process of performing the image processing task on the first image area, the second terminal device may obtain location information of the cursor in the first image. If it is determined, based on the location information of the cursor in the first image, that the image processing task needs to be performed on the second image area, the second terminal device suspends performing the image processing task on the first image area, and performs the image processing task on the second image area. For example, the second terminal device may adjust the processing order of the first image area and the second image area based on the location information of the cursor in the first image, hover time of the cursor, an operation input by the user, or other information.

To understand this solution more intuitively, the following describes, by using an example, a process in which the second terminal device processes the first image and displays the cursor. After obtaining the first image, the second terminal device may start to perform image analysis on the first image based on the initial processing order. For example, an image processing task of a type "text recognition" ranks first in the initial processing order. The second terminal device may first use text detection in "text recognition" as a primary image processing task, but in this case, the second terminal device may not perform tasks such as character segmentation and character recognition. Optionally, provided that the second terminal device has completed the text detection task on the first image, when the user moves the cursor to a text area in the first image, the cursor may be changed to an "I"-shaped cursor in style.

For example, in a process in which the second terminal device performs the image processing task "text detection" on the first image, if the second terminal device knows that the user moves the cursor near a text, and hover time exceeds preset duration, because the second terminal device has not completed text detection on the entire first image in this case, the second terminal device may first suspend performing text detection, and directly start to perform tasks such as character segmentation, character recognition, and special text detection on the text near the cursor.

In a process in which the second terminal device performs the image processing task "text detection" on the first image, if the second terminal device knows that the user moves the cursor outside a text area in the first image, and hover time exceeds preset duration, because the second terminal device has not completed text detection on the entire first image in this case, the second terminal device may first suspend text detection, and directly start to detect the semantic type of the image area in which the cursor is located in the first image. If the semantic type of the image area in which the cursor is located is a QR code, the second terminal device may start to perform an image processing task "QR code recognition" on the image area in which the cursor is located. If the semantic type of the image area in which the cursor is located is an image, the second terminal device may start to perform image processing tasks such as object recognition and object edge recognition on the area in which the cursor is located.

After the second terminal device completes the image processing task performed on the image area in which the cursor is located, if the user does not input another operation by using the cursor, the second terminal device may continue to perform "text detection" on a remaining image area in the first image.

For example, after the second terminal device completes the image processing task "text detection" performed on the first image, in a process in which the second terminal device performs the image processing task "character segmentation" on the text area in the first image, if the second terminal device is performing "character segmentation" on the first image area in the first image, and it is learned that the user performs box selection on the second image area in the first image by using the cursor, the second terminal device may suspend performing "character segmentation" on the first image area, start to perform "character segmentation" on the second image area, and then perform image processing tasks "character recognition" and "special text detection" on the second image area.

After completing the image processing tasks in the second image area, the second terminal device may continue to perform "character segmentation" on a remaining text area in the first image. It should be understood that the example herein is merely for ease of understanding of this solution, and is not intended to limit this solution.

In this embodiment of this application, a processing order of different types of image processing tasks performed on the first image is adjustable, and/or for the first image area and the second image area in the first image, the first image area and the second image area correspond to the same image processing task, and the processing order of the first image area and the second image area is also adjustable. In other words, a processing order of different types of image processing tasks and/or a processing order of different image areas are/is adjustable. This greatly improves flexibility of performing a plurality of image processing tasks on the first image.

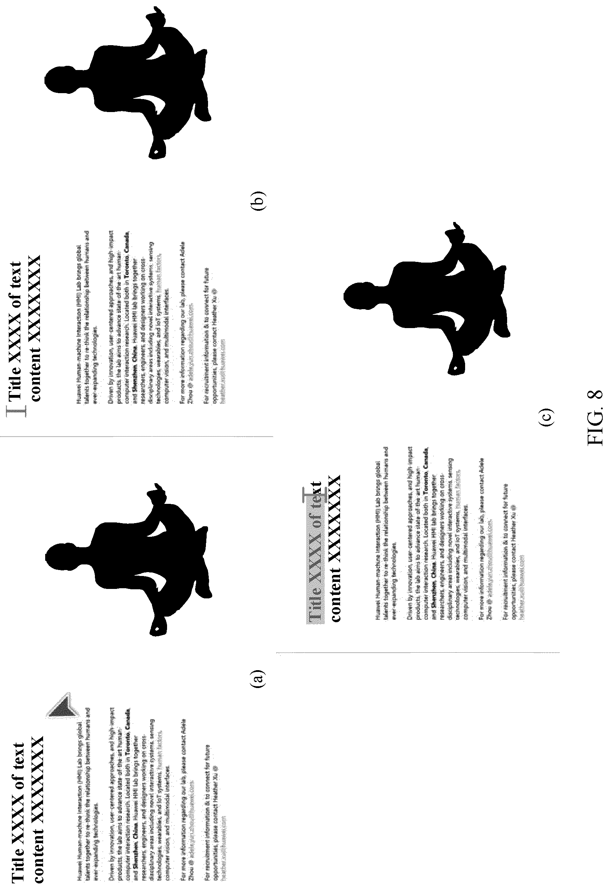

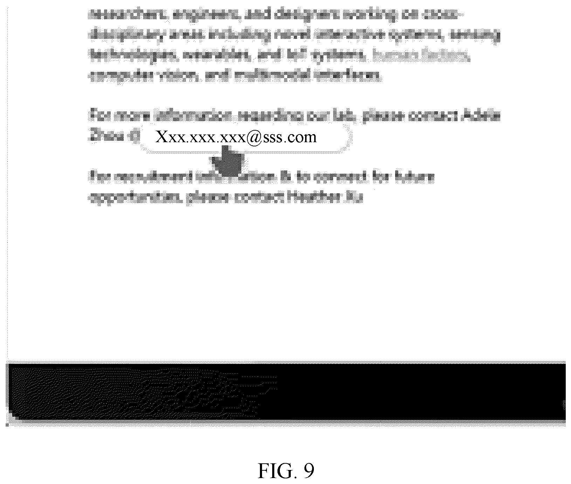

Optionally, the user may obtain, by using different types of interaction operations, image processing results corresponding to different types of image processing tasks. To understand this solution more intuitively, refer to FIG. 8 and FIG. 9. FIG. 8 and FIG. 9 are two interface diagrams of a cursor display method according to an embodiment of this application. First, as shown in FIG. 8, FIG. 8 includes three sub-diagrams: (a), (b), and (c). As shown in the sub-diagram (a) in FIG. 8, when the cursor is located on the first image, the second terminal device displays the "arrow"-shaped cursor (namely, an example of the cursor in the fourth style). When the user moves the cursor to a text area in the first image, entrance to the sub-diagram (b) in FIG. 8 is triggered, that is, the second terminal device changes the "arrow"-shaped cursor to the "I"-shaped cursor. As shown in the sub-diagram (c) in FIG. 8, the user may perform, by using the "I"-shaped cursor, box selection on a text that the user intends to extract. For example, the box selection operation may be pressing a left button on the mouse and moving. It should be understood that the example in FIG. 8 is merely for ease of understanding of this solution, and is not intended to limit this solution.

Still as shown in FIG. 9, a remaining text is blurred in FIG. 9. In FIG. 9, an example in which a special text is an email address is used. When the user moves the cursor to the special text in the first image, the second terminal device changes the "arrow"-shaped cursor to the "hand"-shaped cursor in FIG. 9. If the user inputs a left-click operation on the email address by using the "hand"-shaped cursor, the second terminal device may automatically start an email application and create a new email by using the email address as a recipient. It should be understood that the example in FIG. 9 is merely for ease of understanding of this solution, and is not intended to limit this solution.

For another example, when the user moves the cursor to the email address (namely, an example of the special text) in the first image, the second terminal device changes the "arrow"-shaped cursor (namely, the cursor in the fourth style) to the "hand"-shaped cursor. If the user inputs a left-click operation on the email address by using the "hand"-shaped cursor, the second terminal device may open a browser in the default browser. For another example, if the user inputs a left-click operation on a phone number (namely, an example of the special text) by using the "hand"-shaped cursor, the second terminal device may trigger calling a contact corresponding to the phone number, or send an SMS message to the contact, or store the phone number in an address book, or the like.

For another example, when the user inputs a left-click operation on an address by using the "hand"-shaped cursor, the second terminal device may directly display a location of the address on a map application. For another example, when the user inputs a left-click operation on a unit symbol (for example, foreign exchange currency, temperature, or weight) by using the "hand"-shaped cursor, the second terminal device may convert the unit symbol into a unit commonly used by the user, for example, convert a dollar into corresponding amount of CNY, or convert Fahrenheit into Celsius, or convert a pound into kilograms. This is not exhaustively listed herein.

Optionally, the user may further input a right-click operation on the special text by using the "hand"-shaped cursor, to perform an operation like "copy", "share", "search", or another operation on the special text. This is not exhaustively listed herein.

It should be noted that the foregoing examples show only how to process image processing results of the two types of image processing tasks "text recognition" and "special text recognition". A manner of processing an image processing result generated by performing another type of image processing task is described in a subsequent embodiment. Details are not described herein.

303: Determine first information based on target content in the first image.

In this embodiment of this application, step 303 is an optional step. In a process in which the second terminal device performs at least one type of image processing task on the first image, or after the second terminal device performs all image processing tasks on the first image, the second terminal device may obtain a location of the cursor in the first image; and the second terminal device determines, based on the location of the cursor in the first image, the target content recognized from the first image, and determines the first information based on the target content in the first image.

The first information is used to request another terminal device to grant permission to perform an operation corresponding to the target content, and the operation corresponding to the target content needs to be performed with assistance of the another terminal device in addition to the second terminal device.

For example, if the target content includes a mobile phone number recognized from the first image, and the second terminal device has no call function, the operation corresponding to the target content is making a call to the mobile phone number, and the first information may be used to request the another terminal device to make a call to the "mobile phone number recognized from the first image".

For another example, if the target content includes a QR code that is recognized from the first image and on which a scanning operation needs to be performed, the first information may be used to request the another terminal device to grant permission to perform an operation corresponding to the QR code. For example, the operation corresponding to the QR code may be logging in to an account of a user, paying, or another operation. This is not exhaustively listed herein.

304: Determine a first terminal device.

In this embodiment of this application, step 304 is an optional step. After the second terminal device determines the target content recognized from the first image, because the operation corresponding to the target content needs to be performed with assistance of the another terminal device in addition to the second terminal device, the second terminal device may further determine the first terminal device, in other words, needs to determine a receiver of the first information.

Optionally, when the target content includes the QR code on which the scanning operation needs to be performed, if there is the another terminal device that establishes a projection connection to the second terminal device, step 304 may include: The second terminal device determines, as the first terminal device, the another terminal device that establishes the projection connection to the first terminal device.

If there is no other terminal device that establishes the projection connection to the second terminal device, step 304 may include: The second terminal device obtains identity information of a user, and obtains the first terminal device based on the identity information of the user. An account associated with the user is an account of an application indicated by the QR code, and the first information is used to request the first terminal device to grant permission to perform the operation corresponding to the QR code.

For example, the identity information of the user may be obtained in any one or more other manners: invoking a camera of the second terminal device to photograph the user to obtain face information of the user, invoking a fingerprint recognition sensor of the second terminal device to obtain fingerprint information of the user, recognizing a wearable device worn on the user, or obtaining the identity information of the user in another manner. This is not exhaustively listed herein.

For example, "the account associated with the user exists on the first terminal device" may be understood as that there is information about the user in identity information registered on the first terminal device. In this case, all accounts on the first terminal device are associated with the user. Alternatively, "the account associated with the user exists on the first terminal device" may be understood as that a first account registered by the user in the application indicated by the QR code is determined based on the identity information of the user, and the first account of the user is logged in on the first terminal device.

The second terminal device may perform the step of "obtaining the first terminal device based on the identity information of the user" in a plurality of manners. In an implementation, when there is the identity information of the user in identity information registered on the second terminal device, the first terminal device is obtained from a terminal device associated with the second terminal device, where there is the identity information of the user in the identity information registered on the first terminal device.

In this case, step 304 may include: After obtaining the identity information of the user, the second terminal device may determine whether there is the identity information of the user in the identity information registered on the second terminal device, that is, perform authentication or verification on the user. If a determining result is yes, the first terminal device may be obtained from the terminal device associated with the second terminal device. The first information is used to request the another terminal device to grant permission to perform the operation corresponding to the QR code.

For example, the user may register and log in to a second account in a target application built in an operating system of the second terminal device, and conditions of each terminal device associated with the second terminal device includes: The target application is built in an operating system of the first terminal device, and the second account is logged in to in the target application on the first terminal device.

For another example, at least one terminal device associated with the second terminal device may include at least one terminal device connected to the second terminal device by using a near field communication technology, and the like. A specific implementation of "the terminal device associated with the second terminal device" may be flexibly set with reference to an actual application scenario. This is not limited herein.

Optionally, the first information may further carry any one or more pieces of the following information: the identity information of the user, a verification result of verifying the user, or other information. In this way, the first terminal device may determine, based on the foregoing information, whether the user is an authorized holder of the first terminal device. It should be noted that specific information carried in the first information may be flexibly set with reference to an actual situation. This is not limited herein.

If a determining result is no, that is, the identity information of the user is not registered on the second terminal device, the second terminal device may terminate obtaining the first terminal device, and no longer request the another terminal device to assist in performing the operation corresponding to the QR code.

In this embodiment of this application, only when there is the identity information of the user in the identity information registered on the second terminal device, the first terminal device is obtained from the terminal device associated with the second terminal device, and there is the identity information of the user in the identity information registered on the first terminal device. That is, only on a premise that the user is the authorized holder of the first terminal device and the second terminal device, a request for assisting, by the first terminal device, the second terminal device in performing the operation corresponding to the QR code is triggered. This avoids disturbance to an authorized user of the second terminal device, and improves security of this solution.

In another implementation, the second terminal device may further determine an application indicated by the QR code, determine, based on the identity information of the user, an account registered by the user in the application indicated by the QR code, and determine, as the first terminal device, a terminal device to which the account belongs.

In this embodiment of this application, when the QR code on which the scanning operation needs to be performed is recognized from the first image, the identity information of the user is first obtained, and the first terminal device is determined based on the identity information of the user, where the account that is associated with the user and that is of the application indicated by the QR code exists on the first terminal device; and request information is sent to the first terminal device to which the account associated with the user belongs. In this way, the user can complete the scanning operation without taking out another device, in other words, can complete the scanning operation on the QR code more conveniently. This helps improve user stickiness in this solution.

305: Send the first information to the first terminal device, where the account associated with the user exists on the first terminal device, and the first information is used to request the first terminal device to grant permission to perform the operation corresponding to the target content.

In this embodiment of this application, step 305 is an optional step. After determining the first terminal device, the second terminal device may send the first information to the first terminal device. The account associated with the user exists on the first terminal device, and the first information is used to request the first terminal device to grant permission to perform the operation corresponding to the target content.

Optionally, when sending the first information to the first terminal device, the second terminal device may further send a projection request to the first terminal device. The projection request is used to request to establish a projection connection to the first terminal device, to project a display interface of the first terminal device onto the display interface of the second terminal device.

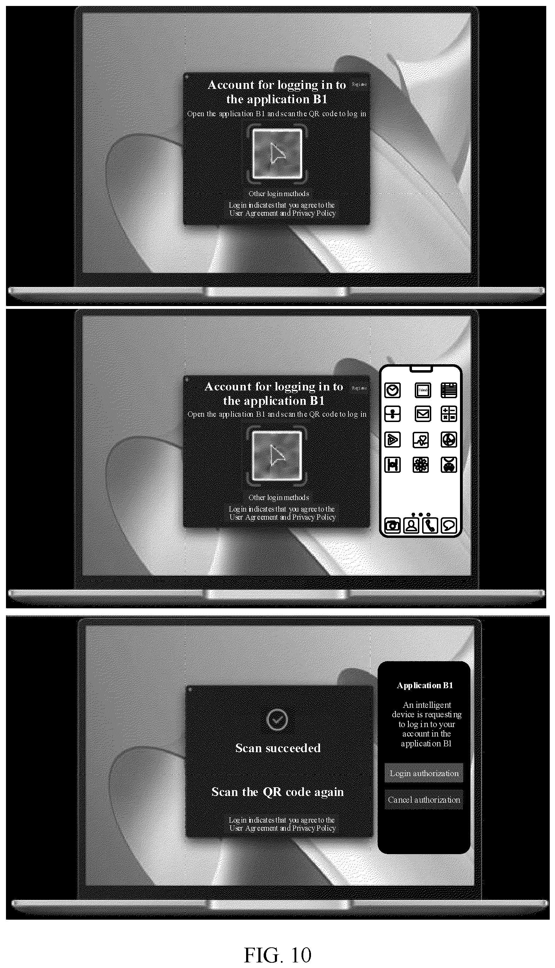

To understand this solution more intuitively, refer to FIG. 10. FIG. 10 is a diagram of a plurality of interfaces on which the first terminal device performs a scanning operation on a QR code on the second terminal device according to this embodiment of this application. In FIG. 10, an example in which the second terminal device is a computer and the first terminal device is a mobile phone is used. FIG. 10 includes three sub-diagrams: an upper sub-diagram, a middle sub-diagram, and a lower sub-diagram. First, as shown in the upper sub-diagram in FIG. 10, the first image includes a QR code. When the cursor moves to the QR code, a cursor in an "arrow" style is displayed, and a highlighted border effect appears around the QR code. After the user clicks the QR code by using the cursor, the computer recognizes the QR code to detect that the QR code is a QR code on which the scanning operation needs to be performed, and then performs the scanning operation on the QR code to log in to an application B1.

The computer may determine whether there is another terminal device that establishes the projection connection to the computer. If a determining result is yes, the first terminal device is determined from the another terminal device that establishes the projection connection to the computer. If a determining result is no, that is, there is no other terminal device that establishes the projection connection to the computer, the first terminal device may be determined based on the identity information of the user. In the foregoing sub-diagram in FIG. 10, an example in which the determined first terminal device is the mobile phone is used. For a specific implementation of the foregoing steps, refer to the descriptions in step 304. Details are not described herein again.

The computer may send the first information to the mobile phone. The first information is used to request the mobile phone to grant permission to perform the operation corresponding to the target image. For example, the first information may carry the QR code recognized from the first image, or the first information may carry an access link corresponding to the QR code. This is not limited herein. Optionally, if there is no projection connection established between the computer and the mobile phone, the first information further includes a projection request. Correspondingly, the computer may receive the first information sent by the mobile phone.

If the mobile phone accepts the projection request initiated by the computer, or the mobile phone has established the projection connection to the computer, as shown in the middle sub-diagram in FIG. 10, a screen of the mobile phone is displayed on a screen of the computer. The mobile phone may start, based on the first information, the application B1 corresponding to the QR code, and perform the scanning operation on the QR code by using the application B1.

After performing the scanning operation, the mobile phone may display a scanning result of the scanning operation on the computer. Specifically, as shown in the lower sub-diagram in FIG. 10, the computer may display a result that the scanning operation has been successfully performed, and the user may re-confirm, on the computer, whether to authorize login to the application B1. When the user clicks "Authorize login" in the lower sub-diagram in FIG. 10, the mobile phone and the computer may receive indication information indicating "Confirm authorization", to enter a login interface of the application B1. It should be noted that the example in FIG. 10 is merely for ease of understanding of this solution, and is not intended to limit this solution.

In this embodiment of this application, when obtaining the target content from the first image, the second terminal device may send the first information to the first terminal device associated with the user, to request the first terminal device to grant permission to perform the operation corresponding to the target content, in other words, perform the operation corresponding to the target content with assistance of the first terminal device. This enriches functions that can be implemented by the second terminal device, and facilitates implementation, thereby helping improve user stickiness in this solution.

306: Display second information corresponding to the second image, where the second information includes any one or more of the following: a storage address of the second image, a sending object of the second image, or a pasting location of the second image; and the second image is included in the first image, or the second image is the first image.

In this embodiment of this application, step 306 is an optional step. In a process in which the second terminal device performs at least one type of image processing task on the first image, or after the second terminal device performs all image processing tasks on the first image, the second terminal device may obtain a location of the cursor in the first image; and the second terminal device determines, based on the location of the cursor in the first image, that the second image is obtained from the first image, and then may display the second information corresponding to the second image.

The second information includes any one or more of the following: the storage address of the second image, the sending object of the second image, or the pasting location of the second image. The second image is included in the first image, or the second image is the first image.

In this embodiment of this application, when the second image is obtained from the first image, the storage address, the sending object, the pasting location, or the like of the second image may be further recommended to the user. This improves convenience of the user in a process of processing the second image, and helps improve user stickiness in this solution.

Optionally, a factor for determining the second information includes any one or more of the following: a category of an object in the second image, at least one application running on a device in a first time period before a current moment, a historical storage address of an image, a historical pasting location of an image, or another factor. For example, the first time period may be 0 seconds, 10 seconds, 15 seconds, 20 seconds, or other duration. A specific value of the first time period may be flexibly set based on an actual application scenario. This is not limited herein.

In this embodiment of this application, the second information recommended to the user is determined based on the category of the object in the second image, the at least one application running on the device in the time period before the current moment, the historical storage address of the image, the historical pasting location of the image, or the another factor. This helps increase a probability that the second information recommended to the user meets expectation of the user.

The following describes this function with reference to a plurality of application scenarios. In an application scenario, after obtaining the second image from the first image, the second terminal device may obtain the category of the object in the second image, and recommend the storage address of the second image to the user based on the category of the object in the second image.

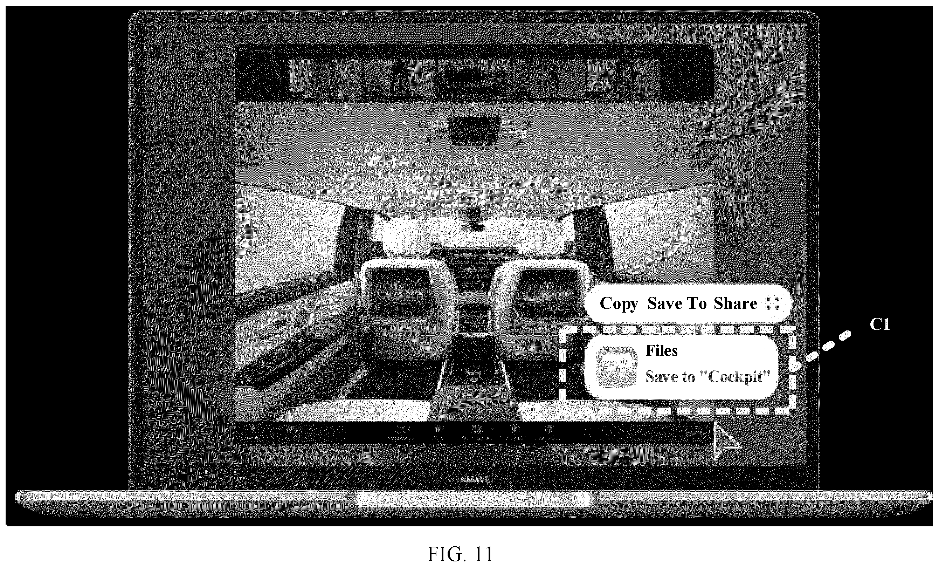

For example, FIG. 11 is an interface diagram of recommending the storage address of the second image to the user according to this embodiment of this application. As shown in FIG. 11, if the second image is an indoor image of a car, a category label of the object in the second image may include "Cockpit", "Car", or another category label. If a folder related to the category label exists in the second terminal device, or a page or a folder related to the category label exists in at least one application (for example, Note, Memo, Cloud disk, or another application) configured in the second terminal device, the second terminal device may recommend, to the user, that the second image is to be stored in the location. For example, as shown in an area C1 in FIG. 11, that the second image is to be stored in the folder "Cockpit". It should be understood that the example in FIG. 11 is merely for ease of understanding of this solution, and is not intended to limit this solution.

In another application scenario, after obtaining the second image from the first image, the second terminal device may detect the at least one application running in the time period before the current moment, and recommend the storage address of the second image, the sending object of the second image, or the pasting location of the second image to the user based on the at least one application running in the time period before the current moment.

For example, when the second terminal device obtains the second image, if the user is chatting with a contact by using instant messaging software, the second terminal device may recommend whether to send the second image to the contact.

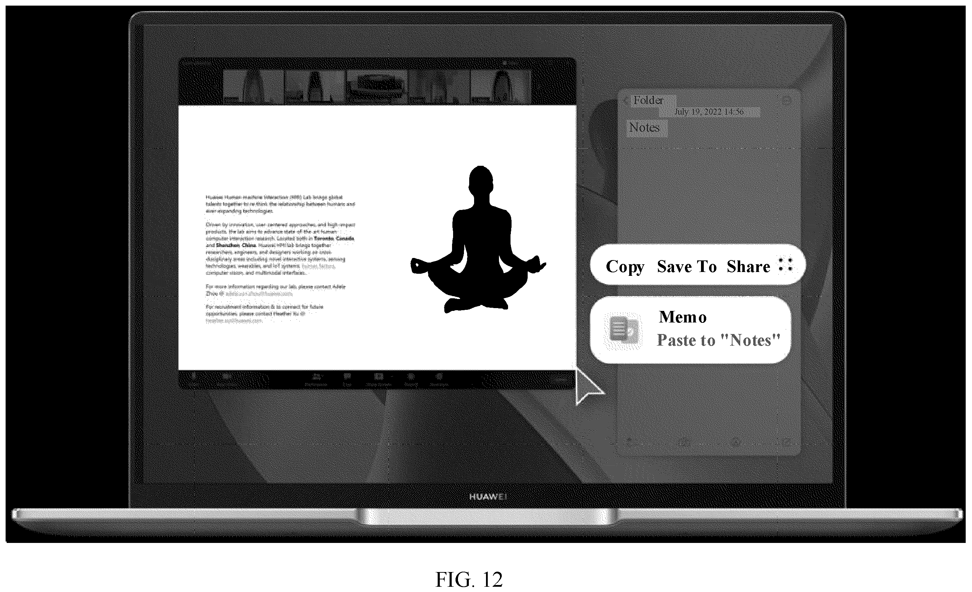

For another example, FIG. 12 is an interface diagram of recommending the pasting location of the second image to the user according to this embodiment of this application. As shown in FIG. 12, the user is taking a note while holding an online conference. If the user takes a screenshot of a conference image (in other words, obtains the first image), and recognizes the second image from the first image, because the second terminal device detects that a note application is running on the device, in this case, the second terminal device may recommend, to the user, whether to paste the second image into the note application. It should be understood that the example in FIG. 12 is merely for ease of understanding of this solution, and is not intended to limit this solution.

In another application scenario, the second terminal device may obtain a storage address and/or a pasting location that are/is of an obtained image and that are/is recently used by the user in a second time period. If it is detected that a quantity of times that the user uses a "storage address of an image" or a "pasting location of an image" in the second time period is greater than or equal to a second threshold, the second terminal device may recommend the "storage address of an image" or the "pasting location of an image" to the user, to determine whether to store the second image in the "storage address of an image" or the "pasting location of an image".

For example, the user is taking a note while holding an online conference. If the second terminal device detects that the user pastes obtained images into the note a plurality of times, after the second terminal device obtains the second image again, the second terminal device may recommend the user whether to paste the obtained second image into the note.

Optionally, in a process in which the second terminal device performs at least one type of image processing task on the first image, or after the second terminal device performs all image processing tasks on the first image, the second terminal device may further obtain other content from the first image based on the location of the cursor, and the second terminal device may automatically recommend a subsequent function based on the obtained content.

For example, when text content including a foreign language is obtained from the first image based on the location of the cursor, the second terminal device may automatically display a translation result corresponding to the text content of the foreign language.

For another example, when a text having a fixed feature rule, for example, a flight number or an express number, is obtained from the first image based on the location of the cursor, the second terminal device may display service information corresponding to the text, for example, take-off time, a landing place, and the like of a flight corresponding to the flight number; or a current location, estimated delivery time, and the like of an express corresponding to the express number. A specific type of displayed service information may be flexibly set during actual application. This is not limited herein.

It should be noted that the foregoing examples are merely for ease of understanding of this solution, and a specific implementation may be flexibly set with reference to an actual application scenario. This is not limited herein.

In addition, step 303 to step 305 and step 306 are all optional steps. If step 303 to step 305 and step 306 are all performed, an execution sequence between step 303 to step 305 and step 306 is not limited in this embodiment of this application. Step 303 to step 305 may be performed before step 306; or step 306 may be performed before step 303 to step 305. The execution sequence may be specifically determined with reference to an actual application scenario. This is not limited herein.

Based on the embodiments corresponding to FIG. 3 to FIG. 12, the following describes, by using an example, a processing manner of "an image processing result generated by performing at least one type of image processing task on the first image".

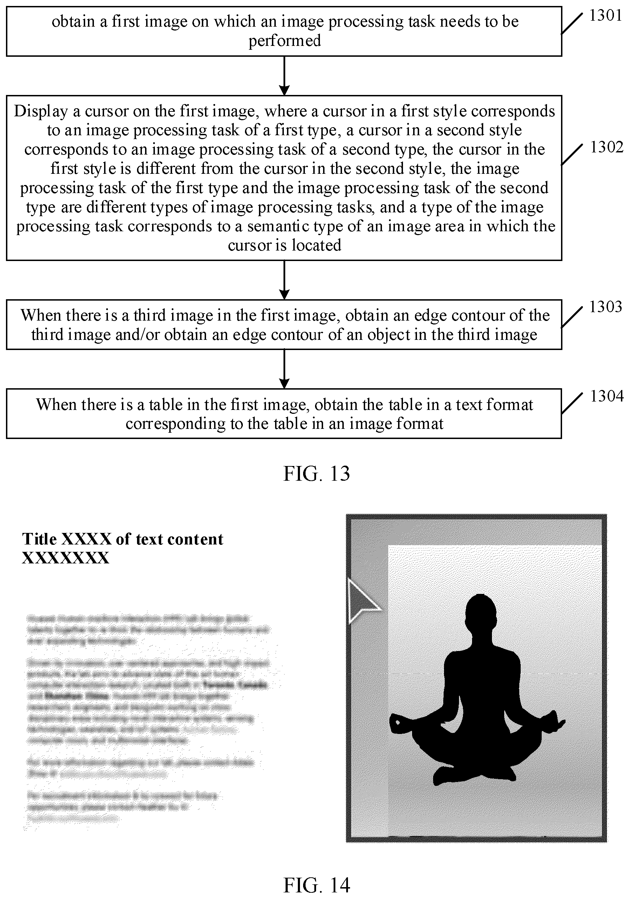

Specifically, FIG. 13 is still another schematic flowchart of a cursor display method according to an embodiment of this application. The cursor display method provided in this embodiment of this application may include the following steps.

1301: Obtain a first image on which an image processing task needs to be performed.

1302: Display a cursor on the first image, where a cursor in a first style corresponds to an image processing task of a first type, a cursor in a second style corresponds to an image processing task of a second type, the cursor in the first style is different from the cursor in the second style, the image processing task of the first type and the image processing task of the second type are different types of image processing tasks, and a type of the image processing task corresponds to a semantic type of an image area in which the cursor is located.

In this embodiment of this application, for specific implementations of step 1301 and step 1302, refer to the descriptions in step 301 and step 302 in the embodiment corresponding to FIG. 3. Details are not described herein again.

1303: When there is a third image in the first image, obtain an edge contour of the third image and/or obtain an edge contour of an object in the third image.

In some embodiments of this application, in a process in which the second terminal device performs at least one image processing task on the first image, if there is the third image in the first image, the edge contour of the third image and/or the edge contour of the object in the third image can be obtained after the image processing task is performed on the third image in the first image.

It should be noted that content included in the second image may be the same as or different from that included in the third image. A difference lies in that the second image is an image that has been obtained from the first image, and the third image is an image included in the first image.

Optionally, the second terminal device may take a screenshot of the third image in the first image or perform image matting on the third image in the first image based on a second operation input by the user on the edge contour of the third image. The second terminal device may store the third image obtained from the first image, or send the third image obtained from the first image to another device, or insert, into another application, the third image obtained from the first image, or the like. For example, the second operation may be that the user clicks the edge contour of the third image, or another operation. This is not exhaustively listed herein.

To understand this solution more intuitively, refer to FIG. 14. FIG. 14 is an interface diagram of an edge contour of a third image in a first image according to an embodiment of this application. In FIG. 14, text content is blurred. When the cursor is located at an edge of the third image (namely, a rectangular image in FIG. 14) in the first image, the cursor is displayed in an "arrow" shape, and a highlight effect is displayed around the third image. In this case, the user may trigger, by clicking the edge of the third image, to take a screenshot of the third image and store the screenshot. It should be understood that the example in FIG. 14 is merely for ease of understanding of this solution, and is not intended to limit this solution.

Optionally, if the first image includes at least two third images that overlap each other, an edge contour of each third image can be obtained when an image processing task is performed on the third images in the first image, and the second terminal device may take a screenshot of the third images in the first image or perform image matting on the third images in the first image based on a second operation that is input by the user on the edge contours of the third images.

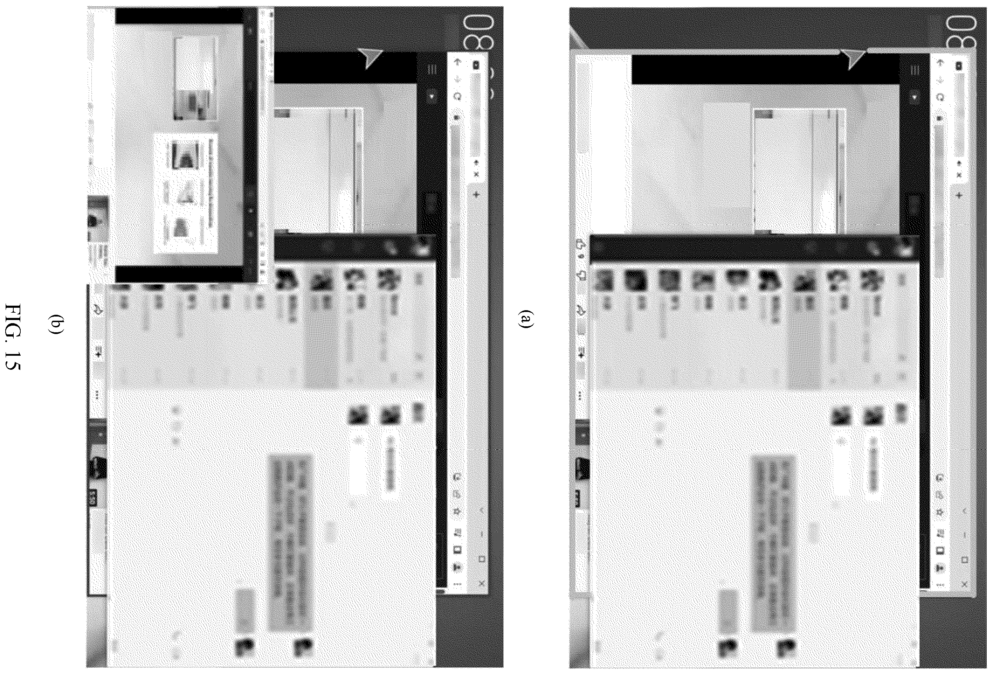

For example, FIG. 15 is another interface diagram of an edge contour of a third image in a first image according to an embodiment of this application. In FIG. 15, for example, two overlapped third images included in the first image are images of two windows overlapping each other, and the two windows are respectively a window of a video player and a window of instant communication software. In FIG. 15, content in the two windows in the first image is blurred.

First, as shown in a sub-diagram (a) in FIG. 15, when the cursor is located at an edge of a window in the first image, the cursor is displayed in an "arrow" shape, and a highlight effect is displayed around the window. In this case, the user may click the edge of the window, a screenshot of the window is triggered to be stored, and then an image in a lower left corner of a sub-diagram (b) in FIG. 15 is obtained. It should be understood that the example in FIG. 15 is merely for ease of understanding of this solution, and is not intended to limit this solution.

Optionally, the second terminal device may trigger, based on a third operation that is input by the user in an image area in which the object is located in the third image, to perform an image matting operation based on the edge contour of the object in the third image, to obtain an image of the object in the third image. The second terminal device may store the image of the object in the third image obtained from the first image, or send the image of the object in the third image to another device, or insert the image of the object in the third image into another application, or the like. This is not exhaustively listed herein. For example, the third operation may be represented as performing a touch and hold operation on the object in the third image, performing a double-click operation on the object in the third image, or performing another type of operation. This is not exhaustively listed herein.

Optionally, the second terminal device may further trigger, based on a third operation input by the user on an edge of the display interface of the second terminal device, to take a screenshot of the entire display interface of the second terminal device. The second terminal device may store an image of the display interface of the second terminal device, or send an image of the display interface of the second terminal device to another device, or insert an image of the display interface of the second terminal device into another application, or the like. This is not exhaustively listed herein.

1304: When there is a table in the first image, obtain the table in a text format corresponding to the table in an image format.

In some embodiments of this application, in a process in which the second terminal device performs the at least one image processing task on the first image, if there is the table in the first image, the table in the text format corresponding to the table in the image format can be obtained after the table in the first image is recognized, and then the user can insert the table in the text format into a text application.

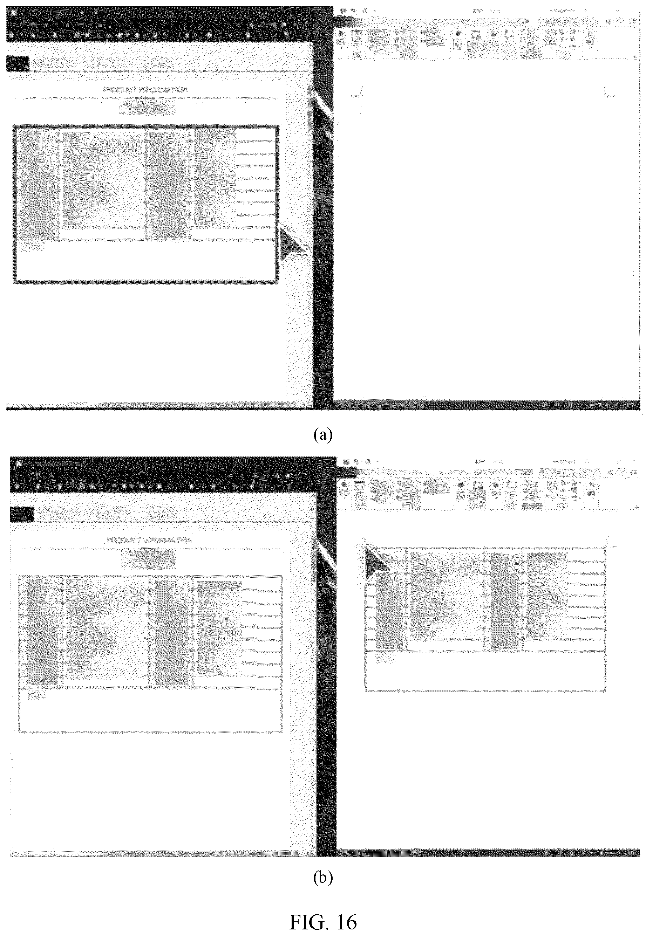

To understand this solution more intuitively, refer to FIG. 16. FIG. 16 is an interface diagram of inserting a table in a first image into a text application according to an embodiment of this application. In FIG. 16, for example, the first image includes a table, and content in the table is blurred. FIG. 16 includes two sub-diagrams: (a) and (b). First, as shown in the sub-diagram (a) in FIG. 16, when the cursor is located on a border of the table in the first image, the cursor is displayed in an "arrow" shape, and a highlight effect is displayed around the border of the table. In this case, the user may insert the table in the text format into the text application by performing a drag operation. For an effect after the insertion, refer to the sub-diagram (b) in FIG. 16. In other words, the table in the first image is directly inserted into the text application. It should be understood that the example in FIG. 16 is merely for ease of understanding of this solution, and is not intended to limit this solution.

In this embodiment of this application, the cursor in the first style corresponds to the image processing task of the first type, and the cursor in the second style corresponds to the image processing task of the second type. That is, cursors in different styles are displayed, to remind the user of a type of image processing task performed on the area in which the cursor is located. This helps reduce a probability of the user performing a misoperation, and helps the user accurately obtain desired information.

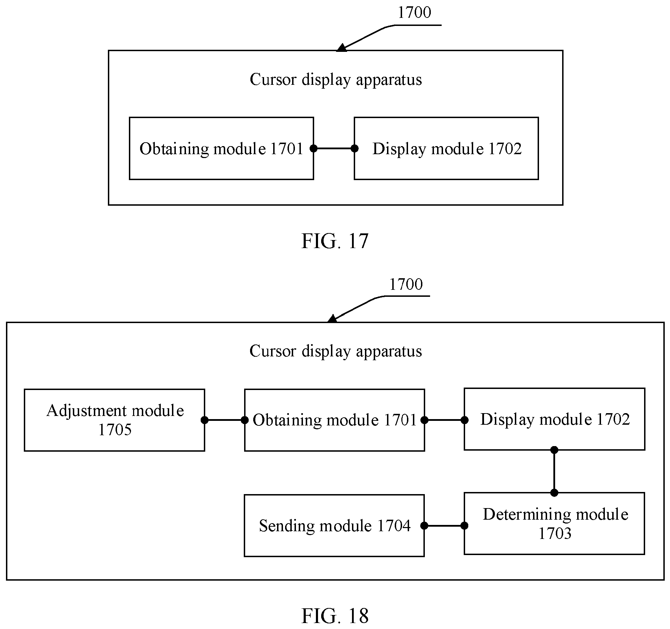

Based on the embodiments corresponding to FIG. 1 to FIG. 16, to better implement the foregoing solutions in embodiments of this application, the following further provides a related device configured to implement the foregoing solutions. Specifically, FIG. 17 is a diagram of a structure of a cursor display apparatus according to an embodiment of this application. The cursor display apparatus 1700 includes an obtaining module 1701 and a display module 1702. The obtaining module 1701 is configured to obtain a first image on which an image processing task needs to be performed.

The display module 1702 is configured to display a cursor on the first image, where a cursor in a first style corresponds to an image processing task of a first type, a cursor in a second style corresponds to an image processing task of a second type, the cursor in the first style is different from the cursor in the second style, the image processing task of the first type and the image processing task of the second type are different types of image processing tasks, and a type of the image processing task corresponds to a semantic type of an image area in which the cursor is located.

In a possible design, FIG. 18 is a diagram of another structure of a cursor display apparatus according to an embodiment of this application. The cursor display apparatus 1700 further includes:
a determining module 1703, configured to determine first information based on target content in a first image; and
a sending module 1704, configured to send the first information to a first terminal device, where an account associated with a user exists on the first terminal device, and the first information is used to request the first terminal device to grant permission to perform an operation corresponding to the target content.

In a possible design, the target includes a QR code on which a scanning operation needs to be performed;
the obtaining module 1701 is further configured to obtain identity information of the user; and
the obtaining module 1701 is further configured to obtain the first terminal device based on the identity information of the user, where the account associated with the user is an account of an application indicated by the QR code, and the first information is used to request the first terminal device to grant permission to perform an operation corresponding to the QR code.

In a possible design, the cursor display apparatus 1700 is used in a second terminal device.

The obtaining module 1701 is specifically configured to: when there is the identity information of the user in identity information registered on the second terminal device, obtain the first terminal device from a terminal device associated with the second terminal device, where there is the identity information of the user in identity information registered on the first terminal device.

In a possible design, a type of an image processing task includes any one or more of the following: performing text recognition on the first image, recognizing a special text in the first image, translating a text in the first image, recognizing an object in the first image, recognizing a QR code in the first image, recognizing a contour of an object in the first image, or performing image matting on an object in the first image. The special text includes any one or more of the following: a website address, an email address, a phone number, an address, an express number, a flight number, a train number, a person name, or a unit symbol.

In a possible design, there are at least two image areas in the first image, the at least two image areas correspond to at least two different types of image processing tasks, and a processing order of the at least two different types of image processing tasks is adjustable; and/or the first image includes a first image area and a second image area, the first image area and the second image area correspond to a same image processing task, and a processing order of the first image area and the second image area is adjustable.

In a possible design, as shown in FIG. 18, the obtaining module 1701 is further configured to obtain location information of the cursor in the first image in a process of performing an image processing task of a third type.

The cursor display apparatus 1700 further includes an adjustment module 1705, configured to: if it is determined, based on the location information of the cursor in the first image, that an image processing task of a fourth type needs to be performed, suspend performing the image processing task of the third type, and start to perform the image processing task of the fourth type. The image processing task of the third type and the image processing task of the fourth type are different image processing tasks.

In a possible design, a factor for determining the initial processing order of the at least two different types of image processing tasks includes any one or more of the following: a historical operation performed by the user on at least one of the image processing tasks, a preset priority of each image processing task, or a processing speed of each image processing task.

In a possible design, the display module 1702 is further configured to display second information corresponding to a second image, where the second information includes any one or more of the following: a storage address of the second image, a sending object of the second image, or a pasting location of the second image; and the second image is included in the first image, or the second image is the first image.

In a possible design, a factor for determining the second information includes any one or more of the following: a category of an object in the second image, at least one application running on a device in a first time period before a current moment, a historical storage address of an image, or a historical pasting location of an image.

In a possible design, the obtaining module 1701 is specifically configured to: trigger freezing of a display interface when obtaining the first operation; and obtain the first image from the frozen display interface based on a selection operation input by the user.

It should be noted that content such as information exchange and an execution process between the modules/units in the cursor display apparatus 1700 is based on a same concept as the method embodiments corresponding to FIG. 2 to FIG. 16 in this application. For specific content, refer to the descriptions in the foregoing method embodiments in this application. Details are not described herein again.

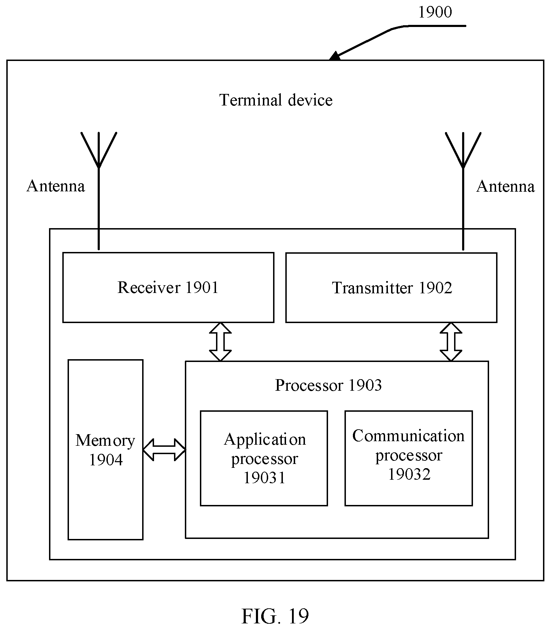

The following describes a terminal device according to an embodiment of this application. FIG. 19 is a diagram of a structure of a terminal device according to an embodiment of this application. Specifically, the terminal device 1900 includes a receiver 1901, a transmitter 1902, a processor 1903, and a memory 1904 (there may be one or more processors 1903 in the terminal device 1900, and one processor is used as an example in FIG. 19). The processor 1903 may include an application processor 19031 and a communication processor 19032. In some embodiments of this application, the receiver 1901, the transmitter 1902, the processor 1903, and the memory 1904 may be connected through a bus or in another manner.

The memory 1904 may include a read-only memory and a random access memory, and provide instructions and data for the processor 1903. A part of the memory 1904 may further include a non-volatile random access memory (non-volatile random access memory, NVRAM). The memory 1904 stores a processor and operation instructions, an executable module or a data structure, or a subset thereof or an extended set thereof. The operation instructions may include various operation instructions for implementing various operations.

The processor 1903 controls an operation of the terminal device. In a specific application, components of the terminal device are coupled together through a bus system. In addition to a data bus, the bus system may further include a power bus, a control bus, a status signal bus, and the like. However, for clear description, various types of buses in the figure are all referred to as the bus system.

The method disclosed in embodiments of this application may be applied to the processor 1903, or may be implemented by the processor 1903. The processor 1903 may be an integrated circuit chip that has a signal processing capability. In an implementation process, steps in the foregoing methods may be implemented by using a hardware integrated logic circuit in the processor 1903, or by using instructions in a form of software. The processor 1903 may be a general-purpose processor, a digital signal processor (digital signal processor, DSP), a microprocessor, or a microcontroller, and may further include an application-specific integrated circuit (application-specific integrated circuit, ASIC), a field-programmable gate array (field-programmable gate array, FPGA) or another programmable logic device, a discrete gate or a transistor logic device, or a discrete hardware component. The processor 1903 may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and software modules in a decoding processor. A software module may be located in a mature storage medium in the art, for example, a random access memory, a flash memory, a read-only memory, a programmable read-only memory, an electrically erasable programmable memory, or a register. The storage medium is located in the memory 1904. The processor 1903 reads information in the memory 1904, and completes the steps in the foregoing methods in combination with hardware of the processor 1903.

The receiver 1901 may be configured to: receive input digital or character information, and generate a signal input related to related setting and function control of the terminal device. The transmitter 1902 may be configured to output digital or character information through a first interface. The transmitter 1902 may be further configured to send instructions to a disk group through the first interface, to modify data in the disk group. The transmitter 1902 may further include a display device like a display.

In embodiments of this application, the processor 1903 is configured to perform the cursor display methods performed by the second terminal device in the embodiments corresponding to FIG. 2 to FIG. 16. It should be noted that a specific manner in which the application processor 19031 in the processor 1903 performs the foregoing steps is based on a same concept as the method embodiments corresponding to FIG. 2 to FIG. 16 in this application. Technical effects brought by the specific manner are the same as those in the method embodiments corresponding to FIG. 2 to FIG. 16 in this application. For specific content, refer to the descriptions in the foregoing method embodiments in this application. Details are not described herein again.

An embodiment of this application further provides a computer-readable storage medium. The computer-readable storage medium stores a program for signal processing. When the program is run on a computer, the computer is enabled to perform the steps performed by the second terminal device in the methods described in the embodiments in FIG. 2 to FIG. 16.

An embodiment of this application further provides a computer program product. When the computer program product runs on a computer, the computer is enabled to perform the steps performed by the second terminal device in the methods described in the embodiment shown in FIG. 2 to FIG. 16.

The terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that the chip performs the cursor display methods described in the embodiments shown in FIG. 2 to FIG. 16. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

The processor mentioned anywhere above may be a general-purpose central processing unit, a microprocessor, an ASIC, or one or more integrated circuits that are configured to control program execution of the method according to the first aspect.

In addition, it should be noted that the described apparatus embodiments are merely examples. The units described as separate parts may or may not be physically separate, and parts displayed as units may or may not be physical units, may be located in one location, or may be distributed on a plurality of network units. Some or all the modules may be selected based on an actual requirement to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. In addition, a specific hardware structure used to implement a same function may be in various forms, for example, in a form of analog circuit, digital circuit, or dedicated circuit. However, as for this application, software program implementation is a better implementation in most cases. Based on such an understanding, the technical solutions of this application essentially or a part contributing to the conventional technology may be implemented in a form of software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used for implementation, all or some of embodiments may be implemented in a form of computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, like a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

## Claims

1. A cursor display method, wherein the method comprises:
obtaining a first image on which an image processing task needs to be performed;
displaying a cursor on the first image, wherein the cursor in a first style corresponds to the image processing task of a first type, the cursor in a second style corresponds to the image processing task of a second type, the cursor in the first style is different from the cursor in the second style, the image processing task of the first type and the image processing task of the second type are different types of image processing tasks, and a type of the image processing task corresponds to a semantic type of an image area in which the cursor is located.

2. The method according to claim 1, wherein the method further comprises:
determining first information based on target content in the first image; and
sending the first information to a first terminal device, wherein an account associated with a user exists on the first terminal device, and the first information is used to request the first terminal device to grant permission to perform an operation corresponding to the target content.

3. The method according to claim 2, wherein the target content comprises a QR code on which a scanning operation needs to be performed, and before the sending the first information to a first terminal device, the method further comprises:
obtaining identity information of the user; and
obtaining the first terminal device based on the identity information of the user, wherein the account associated with the user is an account of an application indicated by the QR code, and the first information is used to request the first terminal device to grant permission to perform an operation corresponding to the QR code.

4. The method according to claim 3, wherein the method is applied to a second terminal device, and the obtaining the first terminal device based on the identity information of the user comprises:
when there is the identity information of the user in identity information registered on the second terminal device, obtaining the first terminal device from a terminal device associated with the second terminal device, wherein there is the identity information of the user in identity information registered on the first terminal device.

5. The method according to any one of claims 1 to 3, wherein the type of the image processing task comprises any one or more of the following: performing text recognition on the first image, recognizing a special text in the first image, translating a text in the first image, recognizing an object in the first image, recognizing the QR code in the first image, recognizing a contour of an object in the first image, or performing image matting on an object in the first image, wherein
the special text comprises any one or more of the following: a website address, an email address, a phone number, an address, an express number, a flight number, a train number, a person name, or a unit symbol.

6. The method according to any one of claims 1 to 3, wherein there are at least two image areas in the first image, the at least two image areas correspond to at least two different types of image processing tasks, and a processing order of the at least two different types of image processing tasks is adjustable; and/or
the first image comprises a first image area and a second image area, the first image area and the second image area correspond to a same image processing task, and a processing order of the first image area and the second image area is adjustable.

7. The method according to claim 6, wherein the method further comprises:
obtaining location information of the cursor in the first image in a process of performing an image processing task of a third type; and
if it is determined, based on the location information of the cursor in the first image, that an image processing task of a fourth type needs to be performed, suspending performing the image processing task of the third type, and starting to perform the image processing task of the fourth type, wherein the image processing task of the third type and the image processing task of the fourth type are different image processing tasks.

8. The method according to claim 6, wherein a factor for determining the initial processing order of the at least two different types of image processing tasks comprises any one or more of the following: a historical operation performed by the user on at least one of the image processing tasks, a preset priority of each image processing task, or a processing speed of each image processing task.

9. The method according to any one of claims 1 to 3, wherein the method further comprises:
displaying second information corresponding to a second image, wherein the second information comprises any one or more of the following: a storage address of the second image, a sending object of the second image, or a pasting location of the second image; and the second image is comprised in the first image, or the second image is the first image.

10. The method according to claim 9, wherein a factor for determining the second information comprises any one or more of the following: a category of an object in the second image, at least one application running on a device in a time period before a current moment, a historical storage address of an image, or a historical pasting location of an image.

11. The method according to any one of claims 1 to 3, wherein the obtaining a first image on which an image processing task needs to be performed comprises:
triggering freezing of a display interface when obtaining a first operation; and
obtaining the first image from the frozen display interface based on a selection operation input by the user.

12. A cursor display apparatus, wherein the apparatus comprises:
an obtaining module, configured to obtain a first image on which an image processing task needs to be performed; and
a display module, configured to display a cursor on the first image, wherein the cursor in a first style corresponds to the image processing task of a first type, the cursor in a second style corresponds to the image processing task of a second type, the cursor in the first style is different from the cursor in the second style, the image processing task of the first type and the image processing task of the second type are different types of image processing tasks, and a type of the image processing task corresponds to a semantic type of an image area in which the cursor is located.

13. The apparatus according to claim 12, wherein the apparatus further comprises:
a determining module, configured to determine first information based on target content in the first image; and
a sending module, configured to send the first information to a first terminal device, wherein an account associated with a user exists on the first terminal device, and the first information is used to request the first terminal device to grant permission to perform an operation corresponding to the target content.

14. The apparatus according to claim 13, wherein the target content comprises a QR code on which a scanning operation needs to be performed;
the obtaining module is further configured to obtain identity information of the user; and
the obtaining module is further configured to obtain the first terminal device based on the identity information of the user, wherein the account associated with the user is an account of an application indicated by the QR code, and the first information is used to request the first terminal device to grant permission to perform an operation corresponding to the QR code.

15. The apparatus according to claim 14, wherein the apparatus is used in a second terminal device; and
the obtaining module is specifically configured to: when there is the identity information of the user in identity information registered on the second terminal device, obtain the first terminal device from a terminal device associated with the second terminal device, wherein there is the identity information of the user in identity information registered on the first terminal device.

16. The apparatus according to any one of claims 12 to 15, wherein the type of the image processing task comprises any one or more of the following: performing text recognition on the first image, recognizing a special text in the first image, translating a text in the first image, recognizing an object in the first image, recognizing the QR code in the first image, recognizing a contour of an object in the first image, or performing image matting on an object in the first image, wherein
the special text comprises any one or more of the following: a website address, an email address, a phone number, an address, an express number, a flight number, a train number, a person name, or a unit symbol.

17. The apparatus according to any one of claims 12 to 15, wherein there are at least two image areas in the first image, the at least two image areas correspond to at least two different types of image processing tasks, and a processing order of the at least two different types of image processing tasks is adjustable; and/or
the first image comprises a first image area and a second image area, the first image area and the second image area correspond to a same image processing task, and a processing order of the first image area and the second image area is adjustable.

18. The apparatus according to claim 17, wherein
the obtaining module is further configured to obtain location information of the cursor in the first image in a process of performing an image processing task of a third type; and
the apparatus further comprises: an adjustment module, configured to: if it is determined, based on the location information of the cursor in the first image, that an image processing task of a fourth type needs to be performed, suspend performing the image processing task of the third type, and start to perform the image processing task of the fourth type, wherein the image processing task of the third type and the image processing task of the fourth type are different image processing tasks.

19. The apparatus according to claim 17, wherein a factor for determining the initial processing order of the at least two different types of image processing tasks comprises any one or more of the following: a historical operation performed by the user on at least one of the image processing tasks, a preset priority of each image processing task, or a processing speed of each image processing task.

20. The apparatus according to any one of claims 12 to 15, wherein
the display module is further configured to display second information corresponding to a second image, wherein the second information comprises any one or more of the following: a storage address of the second image, a sending object of the second image, or a pasting location of the second image; and the second image is comprised in the first image, or the second image is the first image.

21. The apparatus according to claim 20, wherein a factor for determining the second information comprises any one or more of the following: a category of an object in the second image, at least one application running on a device in a time period before a current moment, a historical storage address of an image, or a historical pasting location of an image.

22. The apparatus according to any one of claims 12 to 15, wherein the obtaining module is specifically configured to:
trigger freezing of a display interface when obtaining a first operation; and
obtain the first image from the frozen display interface based on a selection operation input by the user.

23. A computer-readable storage medium, wherein the computer-readable storage medium stores a program, and when the program is run on a computer, the computer is enabled to perform the method according to any one of claims 1 to 11.

24. A terminal device, comprising a processor and a memory, wherein the processor is coupled to the memory,
the memory is configured to store a program; and
the processor is configured to execute the program in the memory, for the terminal device to perform the method according to any one of claims 1 to 11.

25. A computer program product, wherein the computer program product comprises a program, and when the program is run on a computer, the computer is enabled to perform the method according to any one of claims 1 to 11.
